(19) Europäisches Patentamt
European Patent Office
Office européen des brevets

(11) **EP 2 196 513 B1**

(12) **EUROPEAN PATENT SPECIFICATION**

(45) Date of publication and mention
of the grant of the patent:
**22.03.2017  Bulletin 2017/12**

(51) Int Cl.:
***C09J 7/04*** *(2006.01)*   ***C09J 133/04*** *(2006.01)*
***C09J 133/08*** *(2006.01)*

(21) Application number: **08792685.3**

(22) Date of filing: **25.08.2008**

(86) International application number:
**PCT/JP2008/065077**

(87) International publication number:
**WO 2009/031421 (12.03.2009 Gazette 2009/11)**

(54) **DOUBLE-SIDED ADHESIVE TAPE**

DOPPELSEITIGES KLEBEBAND

RUBAN ADHÉSIF DOUBLE FACE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.09.2007  JP 2007232618**
**07.03.2008  JP 2008057676**

(43) Date of publication of application:
**16.06.2010  Bulletin 2010/24**

(73) Proprietor: **DIC Corporation**
**Tokyo 174-8520 (JP)**

(72) Inventors:
• **MORINO, Akinori**
**Kitaadachi-gun**
**Saitama 362-8577 (JP)**
• **KATO, Naoki**
**Kitaadachi-gun**
**Saitama 362-8577 (JP)**
• **HASHIGUCHI, Tsunenori**
**Takaishi-shi**
**Osaka 592-0001 (JP)**
• **TSUJIKAWA, Atsuko**
**Takaishi-shi**
**Osaka 592-0001 (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
**JP-A- 10 316 944      JP-A- 10 316 944**
**JP-A- 2000 239 632    JP-A- 2000 239 632**

**Description**

Technical Field

The present invention relates to a double-sided adhesive tape. More specifically, the present invention relates to a double-sided adhesive tape which strongly adheres to an adherend substrate such as plastic or metal, and is capable of achieving residueless re-release or non-destructive re-release from a nonwoven fabric which is a supporting substrate, without a particular treatment such as heating, upon peeling of the tape after long-term attachment.

Background Art

A double-sided adhesive tape is a bonding device having excellent workability and high adhesion reliability and has been used in a variety of industrial fields such as OA instruments, home electric appliances, and vehicles. Meanwhile, from the viewpoint of global environmental protection, there is an increasing trend that assembled products such as OA instruments have been disassembled after use thereof, followed by recycling and reuse. For this purpose, when parts are bonded to each other by a double-sided adhesive tape, it is necessary to peel the double-sided adhesive tape from the parts, which consequently requires a property (so-called removability) which provides residueless and non-destructive removal of the adhesive tape from a nonwoven fabric which is a supporting substrate.

As a double-sided adhesive sheet to cope with these requirements, there have still been a variety of suggestions.

For example, a double-sided adhesive tape having a tensile strength of 1.5 to 4.5 kgf/20 mm in the flow direction and the width direction has been proposed which is obtained by combining an acrylic adhesive containing an acrylic copolymer composed of certain monomer components as a main component, with a nonwoven fabric having a tensile strength of 1.0 to 3.5 kgf/20 mm in the flow direction and the width direction (see Patent Citation 1). This adhesive tape has a combination of strong adhesive force and excellent removability, but it requires a further improved removability since there is a case where a portion of the adhesive may remain on the adherend substrate when a peeling condition upon re-peeling is strict, for example when the peel rate is extremely high.

Further, there has been proposed a double-sided adhesive tape which is obtained by combining an acrylic adhesive having a certain storage modulus, with a nonwoven fabric composed only of Manila hemp and having a grain ratio of 80% or higher, a tear strength of 50 to 80 gf, a tensile strength of 1 to 2 kgf/15 mm, a difference or less between the flow direction stretch and the width direction stretch of 50%, and an air permeability of 0.3 seconds or less (see Patent Citation 2). Further, there has been proposed a double-sided adhesive tape having an interlaminar fracture area ratio of 10% or less and a tensile strength of 20N/10 mm or higher in the flow direction and the width direction (see Patent Citation 3).

This adhesive tape is intended to inhibit tearing of the tape upon re-peeling, by using a tough substrate material as a nonwoven fabric substrate. However, this adhesive tape may leave residual glue upon re-peeling, due to the separation of an adhesive layer when an adhesive having low impregnation capacity is used.

This problem occurs significantly when an emulsion-type adhesive, particularly an emulsion-type adhesive using an aqueous solvent is employed as an adhesive, or when an adhesive tape is a tape prepared by a transfer method.

Patent Citation 1: Japanese Unexamined Patent Application No. 1996-209086
Patent Citation 2: Japanese Unexamined Patent Application No. 1997-272850
Patent Citation 3: Japanese Unexamined Patent Application No. 2001-152111

Disclosure of Invention

Technical Problem

The object of the present invention is to provide a double-sided adhesive tape which strongly adheres to an adherend substrate such as a plastic or a metal, and can be peeled without residue or destruction of a nonwoven fabric which is a supporting substrate, without a particular treatment such as heating, upon peeling of the tape after being attached for a long period of time.

Technical Solution

The present invention uses an acrylic adhesive having strong adhesive force and a certain storage modulus in an adhesive layer which is disposed around and stacked on a nonwoven fabric substrate having a given strength. The nonwoven fabric substrate is a substrate in which an acrylic resin having a low glass transition temperature is fixed to a nonwoven fabric. This nonwoven fabric substrate is structured in such a way that an acrylic resin is fixed on a fiber surface of the nonwoven fabric substrate, and the binding between the nonwoven fabric substrate and the adhesive is stronger due to improved chemical affinity with the acrylic adhesive. In addition, it is believed that the acrylic resin having a low glass transition temperature improves the strength of the nonwoven fabric substrate to an extent that does not cause excessively great brittleness, and further, the impartment of flexibility greatly favorably contributes to the compatibility between strong adhesive force and excellent removability.

That is, the present invention provides a double-sided adhesive tape including a nonwoven fabric substrate and an adhesive layer composed of an acrylic adhesive composition, wherein the nonwoven fabric substrate is a nonwoven fabric substrate with the fixation of an acrylic copolymer having a glass transition temperature of -10°C or lower to a nonwoven fabric having a tensile strength of 5 to 50N/20 mm in both the MD direction and the TD direction, the acrylic adhesive composition is a water-dispersible emulsion-type acrylic adhesive composition where emulsion particles are dispersed in an aqueous medium, and the adhesive layer has a storage modulus at a frequency of 1 Hz at 30°C of $6 \times 10^4$ to $1 \times 10^5$ Pa.

Advantageous Effects

The double-sided adhesive tape of the present invention strongly and firmly binds to an adherend substrate such as plastic or metal, and enables extremely efficient resideless or non-destructive peeling of the double-sided adhesive tape from a nonwoven fabric which is a supporting substrate, without a particular treatment such as heating, upon peeling of the tape after being attached for a long period of time. As a result, the disassembly of parts connected by the double-sided adhesive tape is simplified, resulting in increased ease regarding recycling or reuse of the parts.

Further, with respect to insufficient adhesion with a nonwoven fabric suffered by adhesives synthesized by emulsion polymerization, very satisfactory removability can be exerted by the configuration of the present invention, since sufficient adhesion with the nonwoven fabric can be secured even for an emulsion-type adhesive.

Best Mode for Carrying out the Invention

The double-sided adhesive tape of the present invention is a double-sided adhesive tape including a nonwoven fabric substrate and an adhesive layer composed of an acrylic adhesive composition, wherein an acrylic copolymer having a glass transition temperature of -10°C or lower is fixed to the nonwoven fabric substrate, the nonwoven fabric substrate has a tensile strength of 10 to 50N/20 mm, the acrylic adhesive composition is a water-dispersible emulsion-type acrylic adhesive composition where emulsion particles are dispersed in an aqueous medium, and the adhesive layer has a storage modulus at a frequency of 1 Hz at 30°C of $6 \times 10^4$ to $1 \times 10^5$ Pa.

As used herein, the term "acrylic copolymer" refers to a copolymer from which (meth)acrylate is obtained as a main monomer component, and the term "acrylic adhesive composition" refers to an adhesive composition which is prepared using an acrylic copolymer as a principle component. The term "(meth)acrylate" refers to acrylate and methacrylate, and the term "(meth)acrylic acid" is similarly a general term referring to acrylic acid and methacrylic acid.

[Nonwoven fabric substrate]

(Nonwoven fabric)

The nonwoven fabric used in the present invention is a nonwoven fabric having a tensile strength of 5 to 45N/20 mm in both the MD direction (longitudinal direction; flow direction) and the TD direction (traverse direction; width direction), preferably 10 to 45N/20 mm, more preferably 15 to 40N/20 mm, and even more preferably 20 to 30N/20 mm. The double-sided adhesive tape of the present invention is configured to have the tensile strength of the nonwoven fabric within the specified range whereby tearing of the tape does not easily occur upon re-peeling, and the tape is not readily stripped off even when the tape is attached to a curved surface or the like.

Further, the term "tensile strength" as used herein refers to a maximum strength measured for a sample having a length of 100 mm and a width of 20 mm, using a Tensilon tensile tester under the environment of 23°C and 50% RH at a tension rate of 300 mm/min.

(Material for nonwoven fabric)

As a material of the nonwoven fabric which is used in the present invention, any known and conventional nonwoven fabric used as a nonwoven fabric substrate of a double-sided adhesive tape can be used as long as a tensile strength of the double-sided adhesive tape satisfies the range specified for the present invention. Typical examples of the nonwoven fabric material may include Manila hemp; pulp; chemical fibers such as rayon, acetate fibers, polyester fibers, polyvinyl alcohol fibers, and polyamide fibers; and mixtures thereof. Further, if necessary, the nonwoven fabric material may be subjected to viscose impregnation or an impregnation treatment using a thermoplastic resin as a binder.

Among these, preferred is hemp alone or a combination of hemp with vinylon, rayon, polyester, pulp or the like. As the hemp, Manila hemp is preferred in terms of strength. Further, the content of the Manila hemp is preferably 50 percent by mass or higher, and more preferably 70 percent by mass or higher. When a nonwoven fabric falling within the specified range is used, the adhesion between the nonwoven fabric and the adhesive is improved, and the removability is also improved since it becomes easy to achieve the compatibility between the flexibility and the cut-resistant strength.

Further, for the purpose of improving the strength of the nonwoven fabric substrate, a known and conventional reinforcing agent is preferably added in a manufacturing process of a nonwoven fabric. As the reinforcing agent, an internally added reinforcing agent or an externally added reinforcing agent may be used alone or as a combination thereof. Examples of the internally added reinforcing agent may include polyacrylic amide-based resins, urea-formaldehyde-based resins, melamine-formaldehyde-based resins, epoxy-polyamide-based resins, and the like. Particularly, preferred is a polyamide amine epichlorohydrin resin which is an epoxy-polyamide-based resin, because it significantly increases an interlayer strength of the nonwoven fabric substrate. An addition amount of the internally added reinforcing agent is preferably in the range of 0.2 to 1 percent by mass relative to the mass of the nonwoven fabric, and even more preferably 0.3 to 0.5 percent by mass. On the other hand, examples of the externally added reinforcing agent may include thermoplastic resins such as viscose, carboxymethylcellulose, polyvinyl alcohol, polyacrylic amide, and the like.

(Grammage and density of nonwoven fabric)

A grammage of the above-mentioned nonwoven fabric is preferably in the range of 10 to 30 $g/m^2$, and more preferably 13 to 25 $g/m^2$. Further, the density of the nonwoven fabric is preferably in the range of 0.15 to 0.35 $g/m^2$, and more preferably 0.2 to 0.3 $g/m^2$. By using such a nonwoven fabric, it is possible to achieve balanced improvements in cut-refractory properties of the nonwoven fabric substrate and an impregnation capacity of the adhesive in the nonwoven fabric, in conjunction with further improved removability.

(Papermaking method of nonwoven fabric)

Even though there is no particular limitation to the papermaking method of a nonwoven fabric, the nonwoven fabric can be obtained by a known wet method. For this purpose, a variety of papermaking methods are adopted using a cylinder paper machine, a tanmo paper machine, a Fourdrinier paper machine, an inclined tanmo paper machine, or the like. Among them, in order to ensure that it is difficult to cut the nonwoven fabric substrate, it is preferable to increase the strength in the MD direction and the TD direction or the isotropy of growth, and preferred is an inclined tanmo paper machine by which the isotropy is easily increased.

(Acrylic copolymer which is fixed to nonwoven fabric)

The double-sided adhesive tape of the present invention employs a nonwoven fabric substrate with the fixation of an acrylic copolymer having a glass transition temperature of -10°C or lower to the nonwoven fabric. As compared to a conventional nonwoven fabric with no fixation of an acrylic copolymer, the nonwoven fabric substrate concerned has a fixation of an acrylic copolymer to a surface of the nonwoven fabric, an improved chemical affinity with the acrylic adhesive, and robust binding between the nonwoven fabric and the adhesive. As a result, detachment of the adhesive from the nonwoven fabric substrate becomes difficult in a re-peeling process for removing the double-sided adhesive tape attached to an adherend substrate for a long period of time. Further, conventionally, when the nonwoven fabric is treated with an acrylic fiber processing agent, the tensile strength of the nonwoven fabric tends to increase, whereas the tear strength significantly decreases whereby the nonwoven fabric becomes easily cut. However, if an acrylic copolymer having a low glass transition temperature is used, this leads to an increase in the tear strength around a temperature of -10°C and significantly contributes to an improvement of removability.

As used herein, the term "fixation of an acrylic copolymer to a nonwoven fabric" refers to a state where the acrylic copolymer is fixed to a surface of the nonwoven fabric, a fiber surface constituting the nonwoven fabric, fiber junction points of the nonwoven fabric, or the like. In this connection, the fixation may be achieved by physical fixation or chemical affinity.

The acrylic copolymer fixed to a nonwoven fabric preferably has a glass transition temperature of -10°C or lower, preferably -15°C or lower, and more preferably -20°C or lower. When an acrylic copolymer having a glass transition temperature higher than -10°C is fixed to a nonwoven fabric, the brittleness of the nonwoven fabric substrate is increased, and thus the tear strength of the nonwoven fabric substrate is lowered. As a result, upon re-peeling, the nonwoven fabric substrate becomes significantly liable to breakage. On the other hand, an acrylic copolymer having a glass transition temperature of -10°C or lower is fixed to a nonwoven fabric, resulting in alleviation of stress applied to the nonwoven fabric substrate during the re-peeling process, and thus making it so that breakage of the nonwoven fabric substrate does not occur easily.

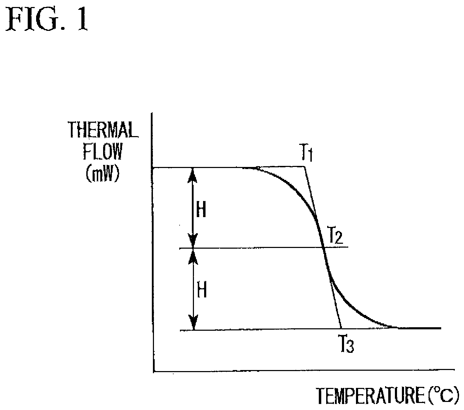

A glass transition temperature of the acrylic copolymer fixed to the nonwoven fabric is calculated, for example, by the measurement of an endothermic curve by means of a differential scanning calorimeter. The glass transition temperature of the acrylic copolymer fixed to the nonwoven fabric is a value represented by "T2", for the endothermic curve measurement by a differential scanning calorimeter shown in FIG. 1, and is a temperature at a point where a straight line being equidistant in the longitudinal direction from an extending straight line of each baseline intersects a curve of the step-like change portion of glass transition.

(Configuration of acrylic copolymer fixed to nonwoven fabric)

As a main monomer constituting the acrylic copolymer fixed to the nonwoven fabric, exemplified are n-butyl acrylate, isooctyl acrylate, 2-ethyl hexyl acrylate, ethyl acrylate, methyl (meth)acrylate and the like. These main monomers may be used alone or in any combination thereof such that a glass transition temperature falls within the range specified in the present invention. Due to easy controllability of a glass transition temperature to -10°C or lower, n-butyl acrylate or 2-ethyl hexyl acrylate is preferably used alone or in a combination thereof as a main monomer. Further, by using n-butyl acrylate or 2-ethyl hexyl acrylate alone or in a combination thereof as a main monomer, and also for the adhesive layer, by using n-butyl acrylate or 2-ethyl hexyl acrylate alone or in a combination thereof as a main monomer, it is possible to further improve the adhesion between the nonwoven fabric substrate and the adhesive layer, and the removability.

Further, an appropriate combination of unsaturated monomers such as (meth)acrylic acid may be used.

Further, with respect to a crosslinked monomer, mention may be made of a type where crosslinking is completed in a polymerization step, and a type where crosslinking does not proceed in a polymerization step, and crosslinking is completed in a drying and heating process after being attached to the nonwoven fabric. An example of the former is a silyl-containing monomer, whereas an example of the latter is a methylol amide group- or alkoxide-containing monomer. Examples of the former silyl-containing monomer may include vinyl trichlorosilane, vinyl trimethoxysilane, vinyl triethoxysilane, vinyl tris($\beta$-methoxyethoxy)silane, $\gamma$-(meth)acryloxypropyl trimethoxysilane, $\gamma$-(meth)acryloxypropyl triethoxysilane, $\gamma$-(meth)acryloxypropyl methyldimethoxysilane, $\gamma$-(meth)acryloxypropyl methyldiethoxysilane, $\gamma$-(meth)acryloxypropyl triisopropoxysilane, N-$\beta$-(N-vinylbenzylaminoethyl)- $\gamma$-aminopropyltrimethoxysilane and a salt thereof, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, and the like. Further, examples of the latter methylol amide group or alkoxide-containing monomer may include N-methylol(meth)acrylic amide, N-isopropoxymethyl(meth)acrylic amide, N-butoxymethyl(meth)acrylic amide, N-isobutoxymethyl(meth)acrylic amide, and the like.

Among them, preferred is a type where crosslinking is completed in a polymerization step, and particularly preferred is the use of a silyl-containing monomer. Incorporation of highly hydrophobic silyl can increase the adhesion with a highly hydrophobic main monomer in the adhesive layer, and improve the removability.

(Fixation method of acrylic copolymer to nonwoven fabric)

Fixation of an acrylic copolymer to a nonwoven fabric may be carried out, for example, by dissolving or dispersing the acrylic copolymer in a solvent, preferably an aqueous medium to prepare an acrylic copolymer solution or an acrylic copolymer emulsion, applying the resulting solution or emulsion to the nonwoven fabric using a conventional method such as gravure coater method, roll coater method, dipping method, or spray method, and then removing the solvent. Among them, preferred is a dipping method which provides uniform attachment of a resin to the nonwoven fabric. As used herein, the term "aqueous medium" refers to water or a mixed solvent of water and a water-soluble solvent.

As the acrylic copolymer solution or emulsion, there is a type which penetrates mainly into fibers of the nonwoven fabric and a type which is attached mainly to fiber surfaces such as fiber junction points. Conventionally, the acrylic copolymer solution is a type which penetrates into fibers of the nonwoven fabric, and the acrylic copolymer emulsion is a type which is attached to fiber junction points of the nonwoven fabric. Among them, preferred is an acrylic copolymer emulsion of a type which is attached to fiber surfaces such as fiber junction points. The attachment of an acrylic resin to fiber surfaces such as fiber junction points results in easy and efficient improvements to the adhesion with an acrylic component of the adhesive layer.

Examples of (meth)acrylate used in the preparation of such an acrylic copolymer emulsion may include alkyl (meth)acrylate such as methyl (meth)acrylate, ethyl (meth)acrylate, n-butyl (meth)acrylate, isobutyl (meth)acrylate, t-butyl (meth)acrylate, 2-ethyl hexyl (meth)acrylate, hexyl (meth)acrylate, cyclohexyl (meth)acrylate, octyl (meth)acrylate, nonyl (meth)acrylate, dodecyl (meth)acrylate, stearyl (meth)acrylate, isobornyl (meth)acrylate, and dicyclopentanyl (meth)acrylate; (meth)acrylate having an aromatic ring such as phenyl (meth)acrylate, and benzyl (meth)acrylate; fluorine-containing (meth)acrylate such as 2,2,2-trifluoroethyl (meth)acrylate, 2,2,3,3-pentafluoropropyl (meth)acrylate, perfluorocyclohexyl (meth)acrylate, 2,2,3,3-tetrafluoropropyl (meth)acrylate, and β-(perfluorooctyl)ethyl (meth)acrylate; glycidyl group-containing (meth)acrylate such as glycidyl (meth)acrylate; hydroxyl group-containing (meth)acrylate such as 2-hydroxyethyl (meth)acrylate, 2-hydroxypropyl (meth)acrylate, polyethylene glycol mono(meth)acrylate, and glycerol mono(meth)acrylate; amino group-containing (meth)acrylate such as aminoethyl (meth)acrylate, N-monoalkyl aminoalkyl (meth)acrylate, and N,N-dialkylaminoalkyl (meth)acrylate; aziridinyl group-containing (meth)acrylate such as 2-aziridinylethyl (meth)acrylate; aryl group-containing (meth)acrylate such as aryl (meth)acrylate; cyclopentenyl group-containing (meth)acrylate such as dicyclopentenyl (meth)acrylate; ethylene glycol di(meth)acrylate, 1,6-hexanediol di(meth)acrylate, neopentyl glycol di(meth)acrylate, trimethylolpropane tri(meth)acrylate, polyethylene glycol di(meth)acrylate, polypropylene glycol di(meth)acrylate, and the like. These materials may be used alone or in a combination of two or more kinds thereof

Further, examples of the monomer which can be used in combination with the (meth)acrylate may include acid compounds such as acrylic acid, methacrylic acid, β-carboxyethyl (meth)acrylate, 2-(meth)acryloyl propionic acid, crotonic acid, itaconic acid, maleic acid, and fumaric acid. Further, methylol amide group or alkoxide-containing monomers such as N-methylol (meth)acrylic amide, N-isopropoxy methyl (meth)acrylic amide, N-butoxy methyl (meth)acrylic amide, and N-isobutoxymethyl (meth)acrylic amide; isocyanate group- and/or blocked isocyanate group-containing monomers such as phenol and methyl ethyl keto oxime adducts of (meth)acryloyl isocyanate and ethyl (meth)acryloyl isocyanate; oxazoline group-containing monomers such as 2-isopropenyl-2-oxazoline, and 2-vinyl-2-oxazoline; amide group-containing monomers such as (meth)acrylic amide, N-monoalkyl (meth)acrylic amide, and N,N-dialkyl (meth)acrylic amide; carbonyl group-containing monomers such as acrolein, and diacetone (meth)acrylic amide; ethylenic unsaturated monomers containing a sulfonate group and/or a sulfate group (and/or a salt thereof), a phosphate group and/or a phosphate ester group (and/or a salt thereof), vinyl sulfonates or salts thereof such as vinyl sulfonate, and styrene sulfonate, aryl group-containing sulfonates or salts thereof such as aryl sulfonate, and 2-methyl aryl sulfonate, (meth)acryloyl group-containing sulfonates or salts thereof such as 2-sulfoethyl (meth)acrylate, and 2-sulfopropyl (meth)acrylate, (meth)acrylic amide group-containing sulfonates or salts thereof such as (meth)acrylic amide-t-butyl sulfonate, Adekaria Soap PP-70 and PPE-710 having a phosphate group (manufactured by Asahi Denka Kogyo K.K.); vinyl esters such as vinyl acetate, vinyl propionate, vinyl butyrate, and vinyl versatate; vinyl ethers such as methyl vinyl ether, ethyl vinyl ether, propyl vinyl ether, butyl vinyl ether, amyl vinyl ether, and hexyl vinyl ether; nitrile group-containing ethylenic unsaturated monomers such as (meth)acrylonitrile; radical polymerizable monomers such as isoprene, chloroprene, butadiene, ethylene, tetrafluoroethylene, fluorinated vinylidene, and N-vinyl pyrrolidone; and the like. These materials may be used alone or in a combination of two or more kinds thereof.

Further, by using silyl group-containing monomers such as vinyl trichlorosilane, vinyl trimethoxysilane, vinyl triethoxysilane, vinyl tris(β-methoxyethoxy)silane, γ-(meth)acryloxypropyl trimethoxysilane, γ-(meth)acryloxypropyl triethoxysilane, γ-(meth)acryloxypropylmethyl dimethoxysilane, γ-(meth)acryloxypropylmethyl diethoxysilane, γ-(meth)acryloxypropyl triisopropoxysilane, N-β-(N-vinylbenzylaminoethyl)-γ-aminopropyl trimethoxysilane and a salt thereof, 2-(3,4-epoxycyclohexyl)ethyl trimethoxysilane, 3-glycidoxypropyl trimethoxysilane, 3-glycidoxypropylmethyl diethoxysilane, and 3-glycidoxypropyltriethoxysilane, it is preferable to improve the removability of the resulting double-sided adhesive tape.

The acrylic copolymer emulsion used in the present invention can be obtained conventionally by copolymerizing the above-mentioned (meth)acrylate and further, if necessary, a mixture of other monomers copolymerizable with such a (meth)acrylate, in an aqueous medium in the presence of a polymerization initiator and, additives such as an emulsifying agent and a dispersion stabilizer.

The polymerization method is not specifically restricted, and there can be employed (1) a mixing-in-one-lot polymerization method in which (meth)acrylate, other monomers, water, a polymerization initiator, and the like are mixed simultaneously and polymerized, or (2) a pre-emulsion method in which (meth)acrylate, other monomers, water, an emulsifying agent, and the like are previously mixed and added dropwise, (3) a monomer dropping method, or the like.

The acrylic copolymer emulsion can be obtained by emulsion polymerization of the above-mentioned polymerization components in an aqueous medium in the presence of additives such as an emulsifying agent, and a free radical-generating catalyst.

As the emulsifying agent, there can be employed various kinds of surfactants such as anionic surfactants, nonionic surfactants, cationic surfactants, and zwitterionic surfactants.

Examples of the anionic surfactant may include sulfate esters of higher alcohol, alkyl benzene sulfonate salts, polyoxy ethylene alkyl phenyl sulfonate salts, polyoxy ethylene polycyclic phenyl ether sulfates (for example, Newcol 707SF, manufactured by Nihon Emulsion Co., Ltd.), and the like. These materials may be used alone or in a combination of two or more kinds thereof.

Examples of the nonionic surfactant may include polyoxy ethylene alkyl ethers, polyoxy ethylene alkyl phenyl ethers, polyoxy ethylene-polyoxy propylene block copolymers, and the like. These materials may be used alone or in a combination of two or more kinds thereof.

Examples of the cationic surfactant may include alkyl ammonium chloride (for example, Arquad 16-50, manufactured by Lion Corporation), and the like. These materials may be used alone or in a combination of two or more kinds thereof.

Examples of the zwitterionic surfactant may include polyoxy ethylene alkyl sulfates, polyoxy ethylene alkyl phenyl sulfates, and the like. These materials may be used alone or in a combination of two or more kinds thereof.

Further, if necessary, there may also be used an emulsifying agent having a polymerizable unsaturated group in the molecular structure thereof, which is generally referred to as "reactive emulsifying agent". Examples of the reactive emulsifying agent may include commercially available products, for example, Latemul S-180 and PD-104 each having a sulfonate group and a salt thereof (manufactured by Kao Corporation), Eleminol JS-2 and RS-30 (manufactured by Sanyo Chemical Industry Co., Ltd.), and the like; Aquaron HS-10, HS-1025, KH-05, and KH-10 each having a sulfate group and a salt thereof (manufactured by Daiichi Kogyo Seiyaku), Adekaria Soap SE-10 and SE-20 (manufactured by Asahi Denka Co., Ltd.), and the like; New frontier A-229 E having a phosphate group (manufactured by Daiichi Kogyo Seiyaku), and the like; and Aquaron RN-10, RN-20, RN-30 and RN-50 each having a nonionic hydrophilic group (manufactured by Daiichi Kogyo Seiyaku), and the like. These materials may be used alone or in a combination of two or more kinds thereof.

Examples of the dispersion stabilizer that can be used in the preparation of the acrylic copolymer emulsion, in addition to the emulsifying agent, may include water-soluble polymer materials such as polyvinyl alcohols, cellulose esters, starches, maleinated polybutadienes, maleinated alkyd resins, polyacrylic acids (salts), polyacrylic amides, aqueous acrylic resins, aqueous polyester resins, aqueous polyamide resins, and aqueous polyurethane resins, which may be synthetic or naturally-occurring without particular limitation. These materials may be used alone or in a combination of two or more kinds thereof.

There is no particular limitation to the aqueous medium that is used in the preparation of the acrylic copolymer emulsion. For example, water may be used alone or a mixed solvent of water and a water-soluble solvent may be used.

The term "mixed solvent of water and a water-soluble solvent" that can be used in the present invention refers to a mixed solvent of substantially water as a main component with a water-soluble solvent, wherein a content of the water-soluble solvent is preferably 10% by weight or less, and more preferably 5% by weight or less, based on the total weight of the mixed solvent.

Examples of the water-soluble solvent may include alcohols such as methyl alcohol, ethyl alcohol, isopropyl alcohol, ethyl carbitol, ethyl cellosolve, and butyl cellosolve, and polar solvents such as N-methyl pyrrolidone. These materials may be used alone or in a combination of two or more kinds thereof.

Further, as the polymerization initiator that is used in the preparation of the acrylic copolymer emulsion, a conventional radical polymerization initiator is used. Examples of the radical polymerization initiator may include persulfates such as potassium persulfate, sodium persulfate, and ammonium persulfate, organic peroxides, for example, diacylperoxides such as benzoyl peroxide, lauroyl peroxide, and decanoylperoxide, dialkylperoxides such as t-butylcumylperoxide, and dicumylperoxide, peroxy esters such as t-butylperoxylaurate, and t-butylperoxybenzoate, and hydroperoxides such as cumene hydroperoxide, paramenthanehydroperoxide, and t-butyl hydroperoxide, hydrogen peroxide, and the like.

Further, there may be used a redox polymerization initiator which is a combination of the peroxide with a reducing agent. Examples of the reducing agent may include ascorbic acid and a salt thereof, erythorbic acid and a salt thereof, tartaric acid and a salt thereof, citric acid and a salt thereof, a metal salt of formaldehyde sulfoxylate, sodium thiosulfate, sodium bisulfite, ferric chloride, and the like. Further, azo-based initiators such as 4,4'-azobis(4-cyanovaleric acid) and 2,2'-azobis(2-amidinopropane) dihydrochloride may also be used. These polymerization initiators may be used alone or in a combination of two or more kinds thereof.

With regard to the acrylic copolymer emulsion, when it is necessary to adjust a molecular weight of a polymer to be used, a compound having a chain transfer capacity may be added as a molecular weight modifier.

Examples of the molecular weight modifier may include mercaptans such as lauryl mercaptan, octyl mercaptan, dodecyl mercaptan, 2-mercapto ethanol, octyl thioglycolate, 3-mercaptopropionate, and thioglycerine, and $\alpha$-methyl styrene dimer.

Further, a neutralizing agent may be used to neutralize carboxyl groups present in the acrylic copolymer emulsion.

The neutralizing agent may be any alkaline material, so long as it does not have detrimental effects on the object of the present invention. Examples of the neutralizing agent may include alkaline metal compounds such as sodium hydroxide, and potassium hydroxide; alkaline earth metal compounds such as calcium hydroxide, and calcium carbonate; ammonia; water-soluble organic amines such as monomethyl amine, dimethyl amine, trimethyl amine, monoethyl amine, diethyl amine, triethyl amine, monopropyl amine, dimethyl propyl amine, monoethanol amine, diethanol amine, triethanol amine, ethylene diamine, and diethylene thiamine; and the like. These materials may be used alone or in a combination of two or more kinds thereof. Among them, particularly where it is desired to further improve water-resistance of the resulting film, it is preferable to use ammonia which is liable to fly and scatter at room temperature or due to heating.

A polymerization temperature upon the preparation of the acrylic copolymer emulsion is variable and may be appropriately selected depending on various conditions such as the kind of monomers to be used, and the kind of polymerization initiators. For example, when emulsion polymerization is carried out in an aqueous medium, the polymerization is conventionally carried out in the range of preferably 30 to 90°C. When the emulsion polymerization is carried out in this temperature range, uniform and stable polymer particles can be obtained with substantially no remainder of unreacted monomers.

The acrylic copolymer emulsion may also be used in admixture with a water-soluble or water-dispersible thermosetting resin, so long as it does not have detrimental effects on the object of the present invention.

Although there is no particular limitation to the water-soluble or water-dispersible thermosetting resin, mention may be made of a phenol resin, an urea resin, a melamine resin, a polyester resin, a polyamide resin, a polyethylene resin, and the like. These materials may be used alone or in a combination of two or more kinds thereof.

Further, to the acrylic copolymer emulsion which is used in the present invention may be appropriately added known and conventional additives such as a pigment, a pH-adjusting agent, a film-forming aid, a leveling agent, a thickening agent, a water repellent, an antifoaming agent, and an emulsifying agent, so long as they do not have detrimental effects on the object of the present invention.

For example, the acrylic copolymer emulsion which is used in the present invention can also be used in a nonwoven fabric, knit, or the like, which is composed of at least one material selected from the group consisting of synthetic fibers such as polyester fiber, polyamide fiber, polyimide fiber, and acrylic fiber, regenerated fibers such as regenerated cellulose fiber, semi-synthetic fibers such as acetate fiber, or natural fibers such as silk, cotton, wool, and pulp.

The acrylic copolymer emulsion which is used in the present invention is preferably adjusted to have a gel fraction of 80% or higher, and more preferably 90% or higher. The authors have found that when a gel fraction is 80% or higher, time-dependent plasticization of the adhesive layer due to the fixed acrylic copolymer can be inhibited, thus decreasing temporal changes of adhesive properties as a double-sided adhesive tape. Further, by specifying a gel fraction to be 80% or higher, a blocking phenomenon does not occur easily even when the nonwoven fabric is wound on a roll after the fixation of the acrylic copolymer to the nonwoven fabric.

In order to calculate a gel fraction, an acrylic copolymer emulsion is applied to a glass plate to be a post-drying thickness of 20 $\mu$m, followed by drying at 100°C for 2 minutes and curing at 140°C for 3 minutes. The thus formed film is cut at an angle of 50 mm and used as a sample. Then, the mass (G1) of the sample before dipping thereof in toluene is measured in advance, and toluene insolubles of the samples are separated by filtration through a 300 mesh screen after dipping thereof in a toluene solution at room temperature for 24 hours, and then dried at 110°C for 1 hour. Then, the mass (G2) of the resulting residue is measured, and the gel fraction is calculated according to the following equation.

$$\text{Gel fraction (percent by mass)} = (G2/G1) \times 100$$

With regard to an amount of the acrylic copolymer fixed to the nonwoven fabric, the fixed amount of the acrylic copolymer, as expressed by the following equation, is preferably 1 to 40 percent by mass, more preferably 3 to 30 percent by mass, and even more preferably 5 to 25 percent by mass. If a fixed amount of the acrylic copolymer is within the above-specified range, fixing effects of the acrylic copolymer can be effectively achieved without a surface of the nonwoven fabric being excessively covered by the acrylic copolymer, and impregnation of the adhesive composition into the nonwoven fabric becomes easy.

$$\text{Acrylic copolymer fixed amount (\%)} = (A-B)/B \times 100$$

A=grammage of nonwoven fabric substrate after fixation of acrylic copolymer
B=grammage of nonwoven fabric substrate before fixation of acrylic copolymer

(Tear strength of nonwoven fabric with fixation of acrylic copolymer)

The strength of the acrylic copolymer-fixed nonwoven fabric substrate is preferably 1N or higher, in terms of tear strength according to JIS-P-8116. By specifying the tear strength to be 1N or higher, it is possible to significantly inhibit destruction of the nonwoven fabric which takes place due to the occurrence and propagation of a destruction starting point by instantaneous tearing during a peeling process, whereby breakage of the substrate becomes difficult. As a result, it is possible to greatly improve the removability of a double-sided adhesive tape attached to an adherend substrate for a long period of time. Even though there is no particular limitation to the upper limit of tear strength, tear strength of about 3N is conventionally given as the upper limit for a substrate using a nonwoven fabric. The upper limit of tear strength is preferably in the range of 1.2 to 2.5N, and more preferably 1.5 to 2.5N.

(Interlayer strength of nonwoven fabric substrate with fixation of acrylic copolymer)

An interlayer strength of the acrylic copolymer-fixed nonwoven fabric substrate is preferably 1N/15 mm or higher. The interlayer strength is measured as follows. First, an adhesive film having a width of 24 mm is closely attached to both sides of a 25x150 mm nonwoven fabric. The adhesive film to be used is one having adhesive force that can peel interphases of the nonwoven fabric, and the length of the adhesive film is established to be longer than that of the nonwoven fabric. Both ends of the sample are cut off, the adhesive film is peeled from an end of the sample adjusted to a size of 15x150 mm, and then about 30 mm of a nonwoven fabric interlayer is peeled. 3 sheets of this sample are prepared in the longitudinal direction and the traverse direction, respectively. Measurement is carried out using a tensile tester Tensilon RTA-100 (manufactured by Orientec Co., Ltd.) at a temperature of 23°C and a humidity of 50%RH. The sample is inserted into a zipper at a sample-holding space of 20 mm, an integral average load obtained at a rate of 100 mm/min and a measurement distance of 50 mm is read, and an average value of each three sheets in the longitudinal direction and the traverse direction is taken as an interlayer strength (N/15mm). Even though there is no particular definition of the upper limit of interlayer strength, interlayer strength of about 4N is conventionally given as the upper limit for a substrate using a nonwoven fabric.

(Tensile strength of nonwoven fabric substrate with fixation of acrylic copolymer)

A tensile strength of the acrylic copolymer-fixed nonwoven fabric substrate is in the range of 10 to 50N/20 mm in both the MD direction (longitudinal direction; flow direction) and the TD direction (traverse direction; width direction), and preferably 15 to 40N/20 mm. The double-sided adhesive tape of the present invention is configured such that the tensile strength of the nonwoven fabric substrate is within the specified strength range, whereby tearing of the tape does not easily occur upon re-peeling, and further, the tape is not readily stripped off even when the tape is attached to a curved surface or the like.

Further, the term "tensile strength" as used herein refers to a maximum strength measured for a sample having a length of 100 mm and a width of 20 mm, using a Tensilon tensile tester under the environment of 23°C and 50% RH at a tension rate of 300 mm/min.

[Adhesive layer]

(Characterization of adhesive layer)

The adhesive layer composed of an acrylic adhesive composition, which constitutes the double-sided adhesive tape of the present invention, employs an adhesive layer having a storage modulus at 30°C of $6 \times 10^4$ to $1 \times 10^5$ Pa. If a storage modulus of the adhesive layer is $6 \times 10^4$ or higher, wetness of an adhesive to an adherend substrate is appropriately inhibited and an increase of adhesive force over time is inhibited, thus improving the removability thereof. On the other hand, the inventors have discovered that if a storage modulus of the adhesive layer is $1 \times 10^5$ Pa or lower, moderate flexibility is expressed on the adhesive, whereby moderate initial adhesiveness is easily obtained.

By specifying a storage modulus of the adhesive layer to within the above range, the resulting double-sided adhesive tape can exhibit strong adhesiveness, specifically strong adhesive force of 12 to 20N/20 mm in terms of adhesive force according to JIS-Z-0237, in conjunction with balanced removability after attachment for a long period of time.

Further, a peak value of a loss tangent (tanδ) is preferably in the range of -25°C to -5°C. This range easily leads to balanced expression of cohesive force of an adhesive necessary for initial adhesiveness and re-peeling.

The dynamic viscoelastic properties can be adjusted by appropriately selecting the type or ratio of monomers for an acrylic copolymer used in an acrylic adhesive, the type or amount of polymerization initiators, the type or amount of crosslinking agents or tackifier resins, polymerization methods, and the like.

Further, the dynamic viscoelastic properties of the adhesive layer are defined by loss tangent of the dynamic viscoelasticity spectrum, or loss tangent and storage modulus, at a particular frequency and a particular temperature, and are also defined by a temperature which exhibits a peak of loss tangent of the dynamic viscoelasticity spectrum at a particular frequency, or a peak value of loss tangent. The dynamic viscoelasticity is measured using a viscoelasticity testing device (trade name: Ares 2KSTD, manufactured by Rheometrix Co., Ltd.), by placing a test specimen between parallel disks corresponding to a measurement section of the device, and measuring a storage modulus (G') and a loss elastic modulus (G") at a frequency of 1 Hz and a temperature of -50°C to 150°C. Even though an adhesive layer having a thickness of 0.5 to 2.5 mm as the test specimen alone may be placed between the parallel disks, stacks of the nonwoven fabric substrate and the adhesive layer may be placed in many folds between the parallel disks. In addition, in the latter case, the thickness of the adhesive alone is adjusted to be in the above-specified range. The inventors have found that if the thickness of the adhesive is adjusted to the above-specified range, there is no effect on the dynamic viscoelasticity spectrum of the adhesive even when the substrate is interposed therebetween.

(Configuration of adhesive)

Since an adhesive composition which constitutes the adhesive layer of the double-sided adhesive tape of the present invention can employ an adhesive composition used in the conventional double-sided adhesive tape, as long as it is an acrylic adhesive composition having the above-mentioned properties, particularly the aforesaid adhesive composition having a high chemical affinity with a nonwoven fabric can be preferably used. The acrylic adhesive composition used in the present invention is an acrylic adhesive composition in which an acrylic copolymer composed of (meth)acrylate alone or a copolymer of (meth)acrylate with another monomer is employed as a base polymer, and if necessary, an additive such as a tackifier resin or a crosslinking agent is compounded thereto.

An acrylic copolymer in the acrylic adhesive composition is obtained by emulsification polymerization (emulsion polymerization). In recent years, from the viewpoint of effects on the human body, and global environmental protection, a water-dispersible emulsion-type adhesive which is synthesized using an aqueous medium and where emulsion particles are dispersed in the aqueous medium is preferred over a solvent-type adhesive obtained by solution polymerization. Hence, the acrylic adhesive composition used in the present invention is a water-dispersible emulsion-type acrylic adhesive composition where emulsion particles are dispersed in an aqueous medium.

(Configuration of emulsion-type adhesive)

As an acrylic copolymer used in an emulsion-type adhesive having strong adhesiveness and excellent removability, it is preferred to use (meth)acrylate having a glass transition point of -10°C or lower. Examples of such a monomer may include butyl acrylate, 2-ethyl hexyl acrylate, nonyl acrylate, dodecyl methacrylate, octadecyl methacrylate, and the like. Further, a content of (meth)acrylate having a glass transition point of -10°C or lower is preferably in the range of 60 to 98 percent by mass, relative to the total monomers, and more preferably 80 to 97 percent by mass. If the amount of (meth)acrylate is within the above-specified range, both adhesive force and cohesive force are good.

Further, it is also preferable to copolymerize high-polarity vinyl monomers. Examples of the high-polarity vinyl monomer may include a monomer having a hydroxyl group, a monomer having a carboxyl group, a monomer having an amino group, a monomer having a glycidyl group, and the like. Examples of the monomer having a hydroxyl group may include 2-hydroxy ethyl (meth)acrylate, 4-hydroxy butyl (meth)acrylate, hydroxy propyl (meth)acrylate, polyethylene glycol acrylate, polypropylene glycol acrylate, and the like; examples of the monomer having a carboxyl group may include (meth)acrylic acid, itaconic acid, maleic acid, maleic anhydride, (meth)acrylic acid dimer, crotonic acid, and the like; and examples of the monomer having an amino group may include N-vinyl pyrrolidone, N-vinyl caprolactam, acryloylmorpholine, dimethyl amino ethyl acrylate, acrylic amide, N,N-dimethyl acrylic amide, and the like. In addition, the high-polarity vinyl monomer may be exemplified vinyl acetate, ethylene oxide-modified succinic acid acrylate, a sulfonate group-containing monomer (such as 2-acrylic amide-2-methyl propane sulfonate), and the like.

Among them, the acrylic copolymer used in the emulsion-type adhesive particularly preferably contains 2-ethyl hexyl acrylate, a nitrogen-containing vinyl monomer, and an ethylenic unsaturated monomer having a carboxyl group as monomer components. Each of the 2-ethyl hexyl acrylate, the nitrogen-containing vinyl monomer and the ethylenic unsaturated monomer having a carboxyl group can improve an interfacial peeling capacity with a variety of adherend subjects, and an adhesive using the corresponding acrylic copolymer can inhibit the occurrence of residual glue, thus achieving very suitable removability, for a variety of adherend substrates, particularly adherend substrates made of stainless steel, styrene-acrylonitrile resin (ABS), high-impact polystyrene resin (HIPS) and polycarbonate/ABS polymer alloy resin (PC/ABS).

When the acrylic copolymer contains 2-ethyl hexyl acrylate, a content of 2-ethyl hexyl acrylate amounts to 20 to 90 percent by mass of monomer components constituting the acrylic copolymer, preferably 30 to 70 percent by mass, more preferably 40 to 60 percent by mass, and even more preferably 45 to 55 percent by mass, whereby good removability can be exhibited while securing adhesive force to an adherend subject.

When the acrylic copolymer contains the nitrogen-containing monomer, the amount of the nitrogen-containing monomer is adjusted to be in the range of 0.1 to 5.0 percent by mass, preferably 0.5 to 4.0 percent by mass, and more preferably 0.5 to 3.5 percent by mass, whereby effects of the present invention can be very appropriately expressed. By specifying the amount of the nitrogen-containing monomer to be higher than the above-mentioned lower limit, the cohesive force of the adhesive layer becomes good when the adhesive layer of the adhesive tape is formed. Accordingly, it is possible to very appropriately inhibit residual glue or poor peeling of the adhesive when the adhesive tape is peeled from the adherend substrate. Further, by specifying the amount of the nitrogen-containing monomer to be lower than the above-mentioned upper limit, good adhesiveness can be maintained without detrimental effects on initial tackiness or adhesiveness.

The carboxyl group-containing ethylenic unsaturated monomer can employ one or more selected from acrylic acid, methacrylic acid, itaconic acid, maleic acid, maleic anhydride, phthalic acid, phthalic anhydride, crotonic acid, and the like. The amount of the carboxyl group-containing ethylenic unsaturated monomer is preferably in the range of 0.5 to 5.0 percent by mass, more preferably 0.5 to 4.0 percent by mass, and more preferably 1.0 to 3.0 percent by mass. Specifying the amount of the carboxyl group-containing ethylenic unsaturated monomer to the above-specified range, the crosslinking reaction with a crosslinking agent proceeds favorably, making it so that fracture of the adhesive does not occur easily upon peeling thereof, and further making residual glue unlikely to occur on adherend substrates such as stainless steel, ABS, HIPS, and PC/ABS.

Even though there is no particular limitation to the ratio of the nitrogen-containing monomer and the ethylenic unsaturated monomer having a carboxyl group, when the number of moles of the nitrogen-containing monomer in the monomer components constituting the acrylic copolymer is expressed as "X", and the number of moles of the ethylenic unsaturated monomer having a carboxyl group is expressed as "Y", the molar ratio X/Y is preferably in the range of 1/1 to 1/10, more preferably 1/1 to 1/5, and even more preferably 1/1 to 1/3. If the X/Y ratio is within the above-specified range, the reaction of the ethylenic unsaturated monomer having a carboxyl group with the crosslinking agent proceeds without being inhibited by the nitrogen-containing monomer, cohesive force is improved, and constant load peelability and removability are further improved.

In the acrylic copolymer containing 2-ethyl hexyl acrylate as a monomer component, it is preferable to use a (meth)acrylic acid alkyl ester having a $C_{1-12}$ alkyl group therewith. For example, exemplified are monomer components such as methyl (meth)acrylate, ethyl (meth)acrylate, n-butyl (meth)acrylate, isobutyl (meth)acrylate, t-butyl (meth)acrylate, n-octyl (meth)acrylate, isooctyl (meth)acrylate, isononyl (meth)acrylate, cyclohexyl (meth)acrylate, and 2-ethylhexyl (meth)acrylate. These materials may be used alone or in a combination of two or more kinds thereof. Among them, preferred monomer components are n-butyl (meth)acrylate, isobutyl (meth)acrylate, t-butyl (meth)acrylate, isooctyl (meth)acrylate, and n-octyl (meth)acrylate, and particularly preferred is n-butyl acrylate. The amount of the monomer component preferably amounts to 10 to 80 percent by mass of monomer components constituting the acrylic copolymer, more preferably 30 to 70 percent by mass, and even more preferably 40 to 60 percent by mass. By ensuring that the amount of the monomer component is within the above-specified range, it becomes easier to obtain strong adhesive force without inhibiting removability.

Further, among the (meth)acrylic acid alkyl esters having a $C_{1-12}$ alkyl group, if methyl methacrylate, ethyl (meth)acrylate, t-butyl (meth)acrylate, and cyclo hexyl methacrylate are used as a content of 1 to 10 percent by mass of the monomer component, in combination with 2-ethyl hexyl acrylate and n-butyl acrylate, they preferably improve the cohesive force of an adhesive film using the composition adopted in the present invention.

The acrylic copolymer used in the present invention preferably has a weight average molecular weight of 50 to 1,200,000, and more preferably 60 to 1,000,000. By ensuring that the weight average molecular weight of the acrylic copolymer is within the above-specified range, it is possible to secure impregnation capacity into the central nonwoven fabric while maintaining high cohesive force, thereby expressing the removability. The weight average molecular weight is in terms of standard polystyrene conversion by gel permeation chromatography (GPC). The measurement of weight average molecular weight is carried out under the following conditions: column: TSKgel GMHXL (manufactured by Tosoh Corporation), column temperature: 40°C, eluent: tetrahydro Franc, flow rate: 1.0 mL/min, and standard polystyrene: TSK standard polystyrene.

In order to adjust molecular weight, a chain transfer agent may be used in the polymerization. As the chain transfer agent, there may be used a known chain transfer agent, for example lauryl mercaptan, glycidyl mercaptan, mercaptoacetic acid, 2-mercapto ethanol, thioglycolic acid, 2-ethylhexyl thioglycolate, 2,3-dimercapto-1-propanol, or the like.

(Tackifier resin)

In the acrylic adhesive composition used in the present invention, it is preferable to use a tackifier resin. Examples of the tackifier resin may include rosin-based resins, polymerized rosin-based resins, polymerized rosin ester-based resins, rosin phenol-based resins, stabilized rosin ester-based resins, disproportionated rosin ester-based resins, terpene-based resins, terpene phenol-based resins, petroleum resins, and the like. For an emulsion-type adhesive composition, it is preferred to use an emulsion-type tackifier resin.

Among them, preferred are polymerized rosin ester-based tackifier resins and rosin phenol-based tackifier resins. Particularly preferred is a combination thereof. Specifically, examples of the polymerized rosin ester-based tackifier resin may include Super Ester E-650 (manufactured by Arakawa Chemical Industry Ltd.), Super Ester E-788 (manufactured by Arakawa Chemical Industry Ltd.), Super Ester E-786-60 (manufactured by Arakawa Chemical Industry Ltd.), Super Ester E-865 (manufactured by Arakawa Chemical Industry Ltd.), Super Ester E-865NT (manufactured by Arakawa Chemical Industry Ltd.), Hariester SK-508 (manufactured by Harima Chemicals, Inc.), Hariester SK-508H (manufactured by Harima Chemicals, Inc.), Hariester SK-816E (manufactured by Harima Chemicals, Inc.), Hariester SK-822E (manufactured by Harima Chemicals, Inc.), Hariester SK-323NS (manufactured by Harima Chemicals, Inc.), and the like. Examples of the rosin phenol-based tackifier resin may include Tamanol E-100 (manufactured by Arakawa Chemical Industry Ltd.), Tamanol E-200 (manufactured by Arakawa Chemical Industry Ltd.), Tamanol E-200NT (manufactured by Arakawa Chemical Industry Ltd.), and the like.

Upon combined use thereof, the ratio of the polymerized rosin ester-based tackifier resin (A) and the rosin phenol-based tackifier resin (B), *i.e.,* the mass ratio of (A)/(B), is preferably in the range of 1/1 to 1/5, more preferably 1/1 to 1/4, and even more preferably 1/1 to 1/3. If the mass ratio of (A)/(B) is within the above-specified range, the compatibility between the acrylic copolymer and the tackifier resin is good, and constant load peelability and removability can be improved.

The tackifier resin preferably has a softening point of 120 to 180°C, and more preferably 140 to 180°C. By compounding a tackifier resin having a high softening point, the high adhesive performance, in particular, constant load peelability can be expected.

(Compounding the ratio of acrylic copolymer to tackifier resin)

When the acrylic copolymer and the tackifier resin are used, the compounding ratio therebetween, i.e., the acrylic copolymer/tackifier resin ratio is preferably in the range of 100/10 to 100/40, and more preferably 100/15 to 100/35. If the acrylic copolymer/tackifier resin ratio is 100/10 or higher, the constant load peelability is improved. If the acrylic copolymer/tackifier resin ratio is 100/40 or lower, the removability is good.

(Type of crosslinking agents)

Further, in the acrylic adhesive composition, a crosslinking agent can be used to improve cohesive force. As the crosslinking agent, there may be used known isocyanates, epoxy compounds, aziridine compounds, multivalent metal salts, metal chelates, keto-hydrazide compounds, oxazoline compounds, silane compounds, and glycidyl (alkoxy) epoxy silane compounds. Among them, preferred is a crosslinking agent of a type which is added after the completion of polymerization, thus allowing a crosslinking reaction to proceed. For example, mention may be made of isocyanate-based crosslinking agents, epoxy compounds, glycidyl (alkoxy) epoxy silane compounds, and the like. Specifically, examples of the epoxy compound may include Denacol EX-832 (manufactured by Nagase ChemteX Corporation), Denacol EX-841 (manufactured by Nagase ChemteX Corporation), Tetrad C (manufactured by Mitsubishi Gas Chemical Company), Tetrad X (manufactured by Mitsubishi Gas Chemical Company), and the like; and examples of the glycidyl (alkoxy) epoxy silane compound may include 2-(3,4-epoxycyclohexylethyltrimethoxysilane (KBM-303; manufactured by Shin-Etsu Silicone Co., Ltd.), γ-glycidoxypropyltrimethoxysilane (KBM-403; manufactured by Shin-Etsu Silicone Co., Ltd.), γ-glycidoxypropylmethyldiethoxysilane (KBE-402; manufactured by Shin-Etsu Silicone Co., Ltd.), γ-glycidoxypropyltriethoxysilane (KBE-403; manufactured by Shin-Etsu Silicone Co., Ltd.), and the like. As an indicator of the crosslinking degree, a gel fraction value is used which measures insoluble matter after dipping of an adhesive layer in toluene for 24 hours. The gel fraction is preferably in the range of 20 to 45 percent by mass. If the gel fraction is more preferably in the range of 25 to 45 percent by mass, and more preferably 30 to 40 percent by mass, both constant load peelability and removability are good.

The gel fraction is a value which is calculated as follows. In order to calculate the gel fraction, an emulsion-type acrylic adhesive composition is applied to a glass plate to be a post-drying thickness of 65 $\mu$m, followed by drying at 100°C for 10 minutes and aging at 40°C for 2 days, and the thus formed film is cut at an angle of 50 mm and used as a sample. Then, the mass (G1) of the sample before dipping thereof in toluene is measured in advance, and toluene insolubles of the sample are separated by filtration through a 300 mesh screen after being in the toluene solution at 23°C for 24 hours, and then dried at 110°C for 1 hour. Then, the mass (G2) of the resulting residue is measured, and the gel fraction is calculated according to the following equation.

$$\text{Gel fraction (percent by mass)} = (G2/G1) \times 100$$

(Additives)

Further, known additives, including plasticizers, softeners, antioxidants, fillers such as glass or plastic fibers, balloons, beads and metal powders, colorants such as pigments and dyes, pH-adjusting agents, film-forming aids, leveling agents, thickening agents, water repellents, and antifoaming agents, may be optionally added to the adhesive composition, if necessary.

(Preparation method/type of emulsifying agents)

The acrylic copolymer used in the acrylic adhesive composition can be prepared by a known and conventional emulsion polymerization method. An initiation method of polymerization may be optionally selected from a thermal initiation method using a peroxide-based initiator such as benzoyl peroxide or lauroyl peroxide, or an azo-based thermal polymerization initiator such as azobisisobutylnitrile, an ultraviolet-irradiated initiation method using an acetophenone-based, benzoin ether-based, benzyl ketal-based, acyl phosphine oxide-based, benzoin-based or benzophenone-based photopolymerization initiator, and an electron beam-irradiated initiation method.

Further, the emulsion-type adhesive used in the present invention can be prepared by an emulsion polymerization method for obtaining an emulsion-type adhesive. In the emulsion polymerization, an anionic or nonionic emulsifying agent and other dispersion stabilizers are appropriately used in order to secure polymerization stability. The emulsifying agent is not particularly limited, and a known emulsifying agent may be used. Examples of the anionic emulsifying agent may include sodium lauryl sulfate, lauryl ammonium sulfate, sodium dodecylbenzene sulfonate, sodium polyoxyethylene alkyl ether sulfate, sodium polyoxyethylene alkyl phenyl ether sulfate, and the like, and examples of the nonionic emulsifying agent may include polyoxyethylene alkyl ether, polyoxyethylene alkyl phenyl ether, and the like.

Further, it is preferred to use a known emulsifying agent having a polymerizable unsaturated group in the molecular structure thereof, which is referred to as "reactive emulsifying agent". Specific examples of the reactive emulsifying agent may include Latemul S-180 (manufactured by Kao Corporation), Latemul PD-104 (manufactured by Kao Corporation), Aquaron HS-10 (manufactured by Daiichi Kogyo Seiyaku), Aquaron HS-20 (manufactured by Daiichi Kogyo Seiyaku), Aquaron KH-10 (manufactured by Daiichi Kogyo Seiyaku), Aquaron KH-1025 (manufactured by Daiichi Kogyo Seiyaku), Aquaron KH-05 (manufactured by Daiichi Kogyo Seiyaku), Aquaron RN-10 (manufactured by Daiichi Kogyo Seiyaku), Aquaron RN-20 (manufactured by Daiichi Kogyo Seiyaku), Aquaron ER-10 (manufactured by Daiichi Kogyo Seiyaku), Aquaron ER-20 (manufactured by Daiichi Kogyo Seiyaku), New frontier A-229E (manufactured by Daiichi Kogyo Seiyaku), Adekaria Soap SE-10 (manufactured by Asahi Denka Co., Ltd.), Adekaria Soap SE-20 (manufactured by Asahi Denka Co., Ltd.), Adekaria Soap SR-10N (manufactured by Asahi Denka Co., Ltd.), Adekaria Soap SR-20N (manufactured by Asahi Denka Co., Ltd.), and the like. The use of the reactive emulsifying agent preferably improves the water-resistance of the film, in addition to the polymerization stability.

(Initiators)

There is no particular limitation to the polymerization initiator used in the emulsion polymerization, and therefore a known polymerization initiator can be used. Specifically, examples of the polymerization initiator may include azo-based initiators such as 2,2'-azobis(2-methylpropionamidine) dihydrochloride, 2,2'-azobis(2-methylpropionamidine) disulfate, 2,2'-azobis(2-amidinopropane) dihydrochloride, 2,2'-azobis[N-(2-carboxyethyl)-2-methylpropionamidine] hydrate, 2,2'-azobis(N,N'-dimethyleneisobutylamidine) dihydrochloride, and 2,2'-azobis[2-(2-imidazolin-2-yl)propane] dihydrochloride, persulfate-based initiators such as potassium persulfate, ammonium persulfate, and sodium persulfate, peroxide-based initiators such as benzoyl peroxide, t-butyl hydroperoxide, and hydrogen peroxide, carbonyl-based initiators such as aromatic carbonyl compounds, redox-based initiators such as a combination of a persulfate with sodium hydrogen sulfite, and a combination of a peroxide with sodium ascorbate, and the like.

(Average particle size)

Further, even though there is no particular limitation to an average particle size of emulsion particles in the emulsion-type adhesive composition used in the present invention, in the range of 50 to 1000 nm is preferred. As used herein, the term "average particle size of particles" refers to a 50% median size based on the volume of emulsion particles, and the numerical value thereof is based on a value that can be measured and obtained by a dynamic light scattering method.

(Solid content concentration)

Further, even though there is no particular limitation to the solid content concentration of the emulsion-type adhesive used in the present invention, the solid content concentration is preferably in the range of 40 to 70% by weight in terms of production costs or transportation costs and from the viewpoint of excellent dryness upon the use of the adhesive after drying.

(Thickness of adhesive layer)

The adhesive layer constituting the double-sided adhesive tape of the present invention preferably has a thickness of 30 to 100 $\mu$m for a single side, and more preferably 50 to 80 $\mu$m.

[Double-sided adhesive tape]

The double-sided adhesive tape of the present invention has a configuration in which adhesive layers are disposed on both sides of a nonwoven fabric substrate with fixation of the acrylic copolymer to the nonwoven fabric. The double-sided adhesive tape is structured such that at least one, and preferably both, of the adhesive layers is composed of the acrylic adhesive composition.

(Preparation method of double-sided adhesive tape)

For the preparation of the double-sided adhesive tape of the present invention, a known and conventional method is appropriately used. For example, a direct method which includes applying an acrylic adhesive solution directly to a nonwoven fabric, followed by drying, or a transfer method which includes applying an acrylic adhesive solution to a peeling sheet, followed by drying, and attaching the sheet to a nonwoven fabric may be used.
Since the double-sided adhesive tape of the present invention proposes a configuration which provides excellent adhesion between the nonwoven fabric and the adhesive, desired effects are easily expressed, particularly in the transfer method in which the adhesion between the nonwoven fabric and the adhesive is a problem to be solved.

(Tensile strength of double-sided adhesive tape)

The double-sided adhesive tape of the present invention preferably has a tensile strength of 20N/20 mm or higher or less than 40N/20 mm in both the MD direction (longitudinal direction; flow direction) and the TD direction (traverse direction; width direction), and more preferably 30N/20 mm or higher or less than 40N/20 mm. By ensuring that a tensile strength of the double-sided adhesive tape is 20N/20 mm or higher, breakage of the adhesive tape does not easily occur upon re-peeling of the tape after long-term attachment of a double-sided adhesive tape having adhesive force specified in the present invention. On the other hand, if the tensile strength of the double-sided adhesive tape is 40N/20 mm or less, when the double-sided tape is used for applications requiring repulsion resistance such as curved surfaces, excessive tackiness as the double-sided tape is inhibited, and it becomes easy to inhibit the peeling of the tape resulting from the submission to repulsive force. Accordingly, if the tensile strength of the double-sided adhesive tape is 20N/20 mm or higher and less than 40N/20 mm, it becomes easy to achieve compatibility between the removability and the repulsion resistance.
Further, the term "tensile strength" as used herein refers to a maximum strength measured for a sample having a length of 100 mm and a width of 20 mm, using a Tensilon tensile tester under the environment of 23°C and 50% RH at a tension rate of 300 mm/min.

(Applications of inventive double-sided adhesive tape)

The double-sided adhesive tape of the present invention strongly binds to an adherend substrate such as plastic or metal, and enables extremely efficient residueless or non-destructive peeling of the double-sided adhesive tape from a nonwoven fabric which is a supporting substrate, without a particular treatment such as heating, upon peeling of the tape after being attached for a long period of time. The double-sided adhesive tape having such properties is optimal as a material for joining parts which are designed to be recyclable or reusable, such as OA instruments and home electric appliances.

Examples

(Example 1)

(1) Adjustment of nonwoven fabric substrate

A solution containing 100% Manila hemp and a 0.5% polyamide amine epichlorohydrin resin was made into a paper having a grammage of 17 g/m$^2$ and a density of 0.27 g/cm$^3$ using an inclined tanmo paper machine, thereby obtaining a nonwoven fabric substrate having a tensile strength of 27.3N/20 mm in the MD direction and 25.8N/20 mm in the TD direction.

(2) Synthesis of acrylic copolymer which is fixed to nonwoven fabric

280 parts of ion-exchange water were charged to a polymerization container equipped with a stirrer, to which nitrogen gas was then supplied, followed by elevation of the internal temperature to 80°C under stirring. After the temperature elevation, 6 parts of a monomer emulsified liquid (1A) having the following composition were added to the reaction container, to which 6 parts of ammonium persulfate and 6 parts of sodium bisulfite were then added to initiate the polymerization. After the internal temperature of the reaction container was maintained at 60°C for 10 minutes, 594 parts of the remaining monomer emulsified liquid (1A) and the following polymerization initiator aqueous solution (2A) were each simultaneously added dropwise to the reaction container to proceed with the polymerization. The drop time was 4 hours for the monomer emulsified liquid (1A) and 4.5 hours for the polymerization initiator aqueous solution (2A). The polymerization process was finished while maintaining the reaction container temperature at 60°C. After the polymerization was complete, the pH of the reaction liquid was adjusted by the addition of aqueous ammonia, thereby obtaining an acrylic copolymer emulsion (1) having a solid content of 50%, a pH of 7, and a gel fraction of 80%.

Composition of monomer emulsified liquid (1A)

    Butyl acrylate; 450 parts
    Acrylic amide; 15 parts
    Acrylonitrile; 15 parts
    Methacrylic acid; 5 parts
    Itaconic acid; 2.5 parts
    γ-(meth)acryloxypropyltrimethoxysilane; 2.5 parts
    Newcol 707SF (manufactured by Nihon Emulsion Co., Ltd.); 10 parts
    Ion-exchange water; 100 parts

Composition of polymerization initiator aqueous solution (2A)

    Ammonium persulfate; 1 part
    Ion-exchange water; 59 parts
    Sodium bisulfite; 1 part
    Ion-exchange water; 59 parts

(3) Adjustment of acrylic copolymer-fixed nonwoven fabric

The acrylic copolymer emulsion (solid content of 50%) and water were diluted to a 2:3 ratio of acrylic copolymer emulsion:water, thereby obtaining a compounding liquid having a resin solid content of 20%. A hemp nonwoven fabric (unit area mass of 17 $g/m^2$) was dipped in the resulting compounding liquid, and was woven in a mangle roll, followed by pre-drying in a perfect oven at 100°C for 2 minutes and curing at 140°C for 3 minutes, thereby obtaining an acrylic copolymer-fixed nonwoven fabric. Further, a fixed amount of the acrylic copolymer to the nonwoven fabric substrate was set to 12% relative to the nonwoven fabric mass.

$$\text{Fixed resin amount } (\%) = (\text{mass after fixation of resin} - \text{mass before fixation of resin})/\text{mass before fixation of resin}$$

(4) Adjustment of acrylic adhesive composition

<Preparation of emulsified liquid>

75 g of deionized water, 20 g of a surfactant Aquaron KH-1025 (manufactured by Daiichi Kogyo Seiyaku; active ingredient 25%), and 37.5g of a surfactant Latemul PD-104 (manufactured by Kao Corporation, active ingredient 20%) were added to a container, followed by homogeneous dissolution. 227.5 g of 2-ethyl hexyl acrylate, 227.5 g of n-butyl acrylate, 25 g of methyl (meth)acrylate, 7.5 g of N-vinyl pyrrolidone, 15.63 g of acrylic acid (active ingredient 80%), and 0.2 g of lauryl mercaptan were added thereto, followed by emulsification to obtain 635.83 g of an emulsified liquid.

<Preparation of acrylic copolymer>

277.5 g of deionized water was added to a reaction container equipped with a stirrer, a reflux condensing tube, a nitrogen-introducing tube, a thermometer, and a dropping funnel, and the temperature of the reaction container was elevated to 60°C under blowing of nitrogen gas. A portion of the emulsified liquid (3.18 g), 5 g of an aqueous ammonium persulfate solution (active ingredient 3%), and 5 g of an aqueous sodium hydrogen sulfite solution (active ingredient 3%) were added thereto under stirring, followed by polymerization for 1 hour while maintaining the temperature at 60°C. Subsequently, 632.65 g of the remaining emulsified liquid and 40 g of an aqueous ammonium persulfate solution (active ingredient 1.25%) were added dropwise over 6 hours using another funnel while maintaining the reaction container at 60°C, followed by polymerization. After the dropwise addition was complete, the reaction contents were stirred for 2 hours while maintaining the reaction container at 60°C, cooled, and then adjusted to a pH of 8 with the addition of aqueous ammonia (active ingredient 10%). The reaction liquid was filtered through a 200 mesh screen, thereby obtaining an acrylic copolymer emulsion, a medium of which was an aqueous medium. The resulting acrylic copolymer emulsion had a solid content concentration of 51.9%, an average particle size of 340 nm, and a weight average molecular weight of 808,000.

<Preparation of emulsion-type acrylic adhesive composition>

To 963.39 g (dry: 500 g) of the above-prepared acrylic copolymer emulsion were added 2.5 g of Surfynol PSA-336 (manufactured by Air Products Japan; active ingredient 100%) as a leveling agent, 2.5 g of Surfynol DF-110D (manufactured by Air Products Japan; active ingredient 100%) as an antifoaming agent, 0.15 g of an epoxy compound Tetrad C (manufactured by Mitsubishi Gas Chemical Company) as a crosslinking agent, 50 g of an emulsion-type polymerized rosin ester-based tackifier resin Super Ester E-865NT (manufactured by Arakawa Chemical Industry Ltd.; softening point 160°C) solids as a tackifier resin, and 50 g of an emulsion-type rosin phenol-based tackifier resin Tamanol E-200NT (manufactured by Arakawa Chemical Industry Ltd.; softening point 150°C) solids, followed by filtration through a 100 mesh screen to obtain an emulsion-type acrylic adhesive composition, a medium of which was an aqueous medium.

(5) Adjustment of double-sided adhesive tape

The adhesive layer, which was obtained by applying the above-prepared emulsion-type acrylic adhesive composition to a peeling-treated polyester film having a thickness of 75 $\mu$m to achieve a post-drying thickness of 65 $\mu$m, followed by drying at 100°C for 5 minutes, was transferred to both sides of the acrylic copolymer-fixed nonwoven fabric, laminated using a thermal roll at 90°C under pressure of 40N/cm, and then aged at 40°C for 2 days to adjust the double-sided adhesive tape. Further, the adhesive layer exhibited a storage modulus at 30°C of 8.0x10$^4$ Pa, a gel fraction of 33.9%, and a peak value (tan$\delta$) of loss tangent of -17°C.

(Example 2)

The double-sided adhesive tape was adjusted in the same manner as in Example 1, except that an acrylic copolymer obtained in the following preparation example was used as the acrylic copolymer being fixed to the nonwoven fabric.

280 parts of ion-exchange water were charged to a polymerization container equipped with a stirrer, followed by blowing of nitrogen gas, and a temperature of the reaction container was elevated to 80°C under stirring. After the temperature elevation, 6 parts of a monomer emulsified liquid (1B) having the following composition were added to the reaction container, to which 6 parts of ammonium persulfate and 6 parts of sodium bisulfite were then added to initiate the polymerization. After the internal temperature of the reaction container was maintained at 60°C for 10 minutes, 594 parts of the remaining monomer emulsified liquid (1B) and the following polymerization initiator aqueous solution (2B) were each simultaneously added dropwise to the reaction container as the polymerization continued. The drop time was 4 hours for the monomer emulsified liquid (1B) and 4.5 hours for the polymerization initiator aqueous solution (2B). The polymerization process was finished while maintaining the reaction container temperature at 60°C. After the polymerization was complete, the pH of the reaction liquid was adjusted by the addition of aqueous ammonia, thereby obtaining an acrylic copolymer emulsion (2) having a solid content of 50%, a pH of 7, and a gel fraction of 92%.

Composition of monomer emulsified liquid (1B)

Butyl acrylate; 300 parts
Ethyl acrylate; 161 parts
Acrylic amide; 20 parts
Methacrylic acid; 5 parts
Itaconic acid; 2.5 parts
γ-(meth)acryloxypropyltrimethoxysilane; 1.5 parts
Newcol 707SF (manufactured by Nihon Emulsion Co., Ltd.); 10 parts
Ion-exchange water; 100 parts

Composition of polymerization initiator aqueous solution (2B)

Ammonium persulfate; 1 part
Ion-exchange water; 59 parts
Sodium bisulfite; 1 part
Ion-exchange water; 59 parts

(Example 3)

The double-sided adhesive tape was adjusted in the same manner as in Example 2, except that a fixed amount of the acrylic copolymer to the nonwoven fabric substrate was 1 % relative to the nonwoven fabric mass.

(Example 4)

The double-sided adhesive tape was adjusted in the same manner as in Example 2, except that a fixed amount of the acrylic copolymer to the nonwoven fabric substrate was 3% relative to the nonwoven fabric mass.

(Example 5)

The double-sided adhesive tape was adjusted in the same manner as in Example 2, except that a fixed amount of the acrylic copolymer to the nonwoven fabric substrate was 6% relative to the nonwoven fabric mass.

(Example 6)

The double-sided adhesive tape was adjusted in the same manner as in Example 2, except that a fixed amount of the acrylic copolymer to the nonwoven fabric substrate was 16% relative to the nonwoven fabric mass.

(Example 7)

The double-sided adhesive tape was adjusted in the same manner as in Example 2, except that a fixed amount of the acrylic copolymer to the nonwoven fabric substrate was 22% relative to the nonwoven fabric mass.

(Example 8)

The double-sided adhesive tape was adjusted in the same manner as in Example 2, except that a fixed amount of the acrylic copolymer to the nonwoven fabric substrate was 30% relative to the nonwoven fabric mass.

(Example 9)

The double-sided adhesive tape was adjusted in the same manner as in Example 2, except that a fixed amount of the acrylic copolymer to the nonwoven fabric substrate was 40% relative to the nonwoven fabric mass.

(Example 10)

The double-sided adhesive tape was adjusted in the same manner as in Example 6, except that a solution containing 90% Manila hemp, 10% polyester, and a 0.5% polyamide amine epichlorohydrin resin was made into a paper having a grammage of 17 g/m$^2$ and a density of 0.28 g/cm$^3$ using an inclined tanmo paper machine, and the resulting nonwoven fabric substrate having a tensile strength of 25.3N/20 mm in the MD direction and 23.5N/20 mm in the TD direction was used in the adjustment of the nonwoven fabric substrate.

(Example 11)

The double-sided adhesive tape was adjusted in the same manner as in Example 2, except that a solution containing 90% Manila hemp and 10% polyester was made into a paper having a grammage of 17 g/m$^2$ and a density of 0.28 g/cm$^3$ using an inclined tanmo paper machine, and the resulting nonwoven fabric substrate having a tensile strength of 8.9N/20 mm in the MD direction and 7.6N/20 mm in the TD direction was used in the adjustment of the nonwoven fabric substrate, and a fixed amount of the acrylic copolymer to the nonwoven fabric substrate was 35% relative to the nonwoven fabric mass.

(Example 12)

The double-sided adhesive tape was adjusted in the same manner as in Example 6, except that an acrylic copolymer obtained in the following preparation example was used as the acrylic copolymer being fixed to the nonwoven fabric.

280 parts of ion-exchange water were charged to a polymerization container equipped with a stirrer, followed by blowing of nitrogen gas, and the temperature of the reaction container was elevated to 80°C under stirring. After the temperature elevation, 6 parts of a monomer emulsified liquid (1F) having the following composition were added to the reaction container, to which 6 parts of ammonium persulfate and 6 parts of sodium bisulfite were then added to initiate the polymerization. After the internal temperature of the reaction container was maintained at 60°C for 10 minutes, 594 parts of the remaining monomer emulsified liquid (1F) and the following polymerization initiator aqueous solution (2F) were each simultaneously added dropwise to the reaction container to proceed with the polymerization. The drop time was 4 hours for the monomer emulsified liquid (1F) and 4.5 hours for the polymerization initiator aqueous solution (2F). The polymerization process was finished while maintaining the reaction container temperature at 60°C. After the polymerization was complete, the pH of the reaction liquid was adjusted by the addition of aqueous ammonia, thereby obtaining an acrylic copolymer emulsion (6) having a solid content of 50%, a pH of 7, and a gel fraction of 98%.

Composition of monomer emulsified liquid (1F)

Butyl acrylate; 245 parts
Ethyl acrylate; 196 parts
Acrylic amide; 24 parts
Methacrylic acid; 7.5 parts
Itaconic acid; 5.0 parts
γ-(meth)acryloxypropyltrimethoxysilane; 2.5 parts
Newcol 707SF (manufactured by Nihon Emulsion Co., Ltd.); 10 parts
Ion-exchange water; 100 parts

Composition of polymerization initiator aqueous solution (2F)

Ammonium persulfate; 1 part
Ion-exchange water; 59 parts
Sodium bisulfite; 1 part
Ion-exchange water; 59 parts

(Example 13)

The double-sided adhesive tape was adjusted in the same manner as in Example 6, except that an acrylic copolymer obtained in the following preparation example was used as the acrylic copolymer being fixed to the nonwoven fabric.

280 parts of ion-exchange water were charged to a polymerization container equipped with a stirrer, followed by blowing of nitrogen gas, and the temperature of the reaction container was elevated to 80°C under stirring. After the temperature elevation, 6 parts of a monomer emulsified liquid (1G) having the following composition were added to the reaction container, to which 6 parts of ammonium persulfate and 6 parts of sodium bisulfite were then added to initiate the polymerization. After the internal temperature of the reaction container was maintained at 60°C for 10 minutes, 594 parts of the remaining monomer emulsified liquid (1 G) and the following polymerization initiator aqueous solution (2G) were each simultaneously added dropwise to the reaction container to proceed with the polymerization.

The drop time was 4 hours for the monomer emulsified liquid (1 G) and 4.5 hours for the polymerization initiator aqueous solution (2G). The polymerization process was finished while maintaining the reaction container temperature at 60°C. After the polymerization was complete, the pH of the reaction liquid was adjusted by the addition of aqueous ammonia, thereby obtaining an acrylic copolymer emulsion (7) having a solid content of 50%, a pH of 7, and a gel fraction of 98%.

Composition of monomer emulsified liquid (1G)

Butyl acrylate; 199 parts
Ethyl acrylate; 198 parts
Acrylic amide; 40 parts
Methacrylic acid; 40 parts
Itaconic acid; 10 parts
γ-(meth)acryloxypropyltrimethoxysilane; 3.0 parts
Newcol 707SF (manufactured by Nihon Emulsion Co., Ltd.); 10 parts
Ion-exchange water; 100 parts

Composition of polymerization initiator aqueous solution (2G)

Ammonium persulfate; 1 part
Ion-exchange water; 59 parts
Sodium bisulfite; 1 part
Ion-exchange water; 59 parts

(Example 14) (for comparison and/or reference only)

The double-sided adhesive tape was adjusted in the same manner as in Example 6, except that an acrylic copolymer obtained in the following preparation example was used.

<Adjustment of acrylic adhesive composition>

96 parts of n-butyl acrylate, 2.5 parts of N-vinyl pyrrolidone, 0.5 parts of 2-hydroxy ethyl acrylate, 1.0 part of acrylic acid and 0.2 parts of 2,2'-azobisisobutylnitrile as a polymerization initiator were dissolved in 100 parts of ethyl acetate in a reaction container equipped with a condensing tube, a stirrer, a thermometer, and a dropping funnel, followed by nitrogen substitution and polymerization at 80°C for 8 hours to obtain an adhesive solution.

Relative to 100 parts of solids of the above adhesive solution, 2.0 parts of an isocyanate-based crosslinking agent (Coronate L-45, manufactured by Nippon Polyurethane Industry Co.), 10 parts of a disproportionated rosin glycerin ester (softening point 100°C), and 10 parts of a polymerized rosin pentaerythritol ester (softening point 128°C) were compounded. Then, a solid content of the resulting mixture was adjusted to 40% by ethyl acetate, thereby obtaining a solvent-type acrylic adhesive composition.

An adhesive layer of the resulting double-sided adhesive tape exhibited a storage modulus at 30°C of $7.5 \times 10^4$ Pa, a gel fraction of 33%, and a peak value (tanδ) of loss tangent of-12°C.

(Example 15)

The double-sided adhesive tape was adjusted in the same manner as in Example 6, except that an acrylic adhesive obtained in the following preparation example was used.

<Adjustment of acrylic adhesive composition>

75 g of deionized water, 20 g of a surfactant Aquaron KH-1025 (manufactured by Daiichi Kogyo Seiyaku; active ingredient 25%), and 37.5 g of a surfactant Latemul PD-104 (manufactured by Kao Corporation, active ingredient 20%) were added to a container, followed by homogeneous dissolution. 450 g of 2-ethyl hexyl acrylate, 5 g of n-butyl acrylate, 25 g of methyl (meth)acrylate, 7.5 g of N-vinyl pyrrolidone, 15.63 g of acrylic acid (active ingredient 80%), and 0.2 g of lauryl mercaptan were added thereto, followed by emulsification to obtain 635.83 g of an emulsified liquid. The emulsion-type acrylic adhesive composition whose medium is an aqueous medium was adjusted in the same manner as in Example 6, except that the resulting emulsified liquid was used.

An adhesive layer of the resulting double-sided adhesive tape exhibited a storage modulus at 30°C of $6.0 \times 10^4$ Pa, a gel fraction of 34%, and a peak value ($\tan\delta$) of loss tangent of -19°C.

(Example 16)

The double-sided adhesive tape was adjusted in the same manner as in Example 6, except that an acrylic adhesive obtained in the following preparation example was used.

<Preparation of acrylic adhesive>

75 g of deionized water, 20 g of a surfactant Aquaron KH-1025 (manufactured by Daiichi Kogyo Seiyaku; active ingredient 25%), and 37.5 g of a surfactant Latemul PD-104 (manufactured by Kao Corporation, active ingredient 20%) were added to a container, followed by homogeneous dissolution. 100 g of 2-ethyl hexyl acrylate, 352.5 g ofn-butyl acrylate, 25 g of methyl (meth)acrylate, 7.5 g of N-vinyl pyrrolidone, 18.75 g of acrylic acid (active ingredient 80%), and 0.2 g of lauryl mercaptan were added thereto, followed by emulsification to obtain 636.45 g of an emulsified liquid. The acrylic copolymer emulsion whose medium is an aqueous medium was adjusted in the same manner as in Example 6, except that the resulting emulsified liquid was used.

The emulsion-type acrylic adhesive composition whose medium is an aqueous medium was adjusted in the same manner as in Example 6, except that the resulting acrylic copolymer emulsion was used and 100 g of an emulsion-type rosin phenol-based tackifier resin Tamanol E-200NT (manufactured by Arakawa Chemical Industry Ltd.; softening point 150°C) solids was added.

An adhesive layer of the resulting double-sided adhesive tape exhibited a storage modulus at 30°C of $1.0 \times 10^5$ Pa, a gel fraction of 31%, and a peak value ($\tan\delta$) of loss tangent of -7°C.

(Comparative Example 1)

The double-sided adhesive tape was adjusted in the same manner as in Example 1, except that an acrylic copolymer obtained in the following preparation example was used as the acrylic copolymer being fixed to the nonwoven fabric.

280 parts of ion-exchange water were charged to a polymerization container equipped with a stirrer, followed by blowing of nitrogen gas, and a temperature of the reaction container was elevated to 80°C under stirring. After the temperature elevation, 6 parts of a monomer emulsified liquid (1 C) having the following composition were added to the reaction container, to which 6 parts of ammonium persulfate and 6 parts of sodium bisulfite were then added to initiate the polymerization. After the internal temperature of the reaction container was maintained at 60°C for 10 minutes, 594 parts of the remaining monomer emulsified liquid (1C) and the following polymerization initiator aqueous solution (2C) were each simultaneously added dropwise to the reaction container to proceed with the polymerization. The drop time was 4 hours for the monomer emulsified liquid (1C) and 4.5 hours for the polymerization initiator aqueous solution (2C). The polymerization process was finished while maintaining the reaction container temperature at 60°C. After the polymerization was complete, the pH of the reaction liquid was adjusted by the addition of aqueous ammonia, thereby obtaining an acrylic copolymer emulsion (3) having a solid content of 50% and a pH of 7.

Composition of monomer emulsified liquid (1 C)

Ethyl acrylate; 427 parts
Methyl (meth)acrylate; 35 parts
Methacrylic acid; 5 parts
Itaconic acid; 2.5 parts
Acrylic amide; 20 parts
γ-(meth)acryloxypropyltrimethoxysilane; 0.5 parts
Newcol 707SF (manufactured by Nihon Emulsion Co., Ltd.); 10 parts
Ion-exchange water; 100 parts

Composition of polymerization initiator aqueous solution (2C)

Ammonium persulfate; 1 part
Ion-exchange water; 59 parts
Sodium bisulfite; 1 part
Ion-exchange water; 59 parts

(Comparative Example 2)

The double-sided adhesive tape was obtained in the same manner as in Example 1, except that an acrylic copolymer obtained in the following preparation example was used as the acrylic copolymer being fixed to the nonwoven fabric.
280 parts of ion-exchange water were charged to a polymerization container equipped with a stirrer, followed by blowing of nitrogen gas, and a temperature of the reaction container was elevated to 80°C under stirring. After the temperature elevation, 6 parts of a monomer emulsified liquid (1D) having the following composition were added to the reaction container, to which 6 parts of ammonium persulfate and 6 parts of sodium bisulfite were then added to initiate the polymerization. After the internal temperature of the reaction container was maintained at 60°C for 10 minutes, 594 parts of the remaining monomer emulsified liquid (1D) and the following polymerization initiator aqueous solution (2D) were each simultaneously added dropwise to the reaction container to proceed with the polymerization. The drop time was 4 hours for the monomer emulsified liquid (1D) and 4.5 hours for the polymerization initiator aqueous solution (2D). The polymerization process was finished while maintaining the reaction container temperature at 60°C. After the polymerization was complete, the pH of the reaction liquid was adjusted by the addition of aqueous ammonia, thereby obtaining an acrylic copolymer emulsion (4) having a solid content of 50%, a pH of 7, and a gel fraction of 88%.

Composition of monomer emulsified liquid (1D)

Butyl acrylate; 292 parts
Methyl (meth)acrylate; 185 parts
Methacrylic acid; 11 parts
γ-(meth)acryloxypropyltrimethoxysilane; 2 parts
Newcol 707SF (manufactured by Nihon Emulsion Co., Ltd.); 10 parts
Ion-exchange water; 100 parts

Composition of polymerization initiator aqueous solution (2D)

Ammonium persulfate; 1 part
Ion-exchange water; 59 parts
Sodium bisulfite; 1 part
Ion-exchange water; 59 parts

(Comparative Example 3)

The double-sided adhesive tape was adjusted in the same manner as in Example 1, except that an acrylic copolymer obtained in the following preparation example was used as the acrylic copolymer being fixed to the nonwoven fabric.

280 parts of ion-exchange water were charged to a polymerization container equipped with a stirrer, followed by blowing of nitrogen gas, and the temperature of the reaction container was elevated to 80°C under stirring. After the temperature elevation, 6 parts of a monomer emulsified liquid (1E) having the following composition were added to the reaction container, to which 6 parts of ammonium persulfate and 6 parts of sodium bisulfite were then added to initiate the polymerization. After the internal temperature of the reaction container was maintained at 60°C for 10 minutes, 594 parts of the remaining monomer emulsified liquid (1E) and the following polymerization initiator aqueous solution (2E) were each simultaneously added dropwise to the reaction container to proceed with the polymerization. The drop time was 4 hours for the monomer emulsified liquid (1E) and 4.5 hours for the polymerization initiator aqueous solution (2E). The polymerization process was finished while maintaining the reaction container temperature at 60°C. After the polymerization was complete, the pH of the reaction liquid was adjusted by the addition of aqueous ammonia, thereby obtaining an acrylic copolymer emulsion (5) having a solid content of 50%, a pH of 7.0, and a gel fraction of 90%.

Composition of monomer emulsified liquid (1E)

Butyl acrylate; 170 parts
Methyl (meth)acrylate; 278 parts
Acrylic amide; 10 parts
Methacrylic acid; 20 parts
γ-(meth)acryloxypropyltrimethoxyslane; 2 parts
Newcol 707SF (manufactured by Nihon Emulsion Co., Ltd.); 20 parts
Ion-exchange water; 100 parts

Composition of polymerization initiator aqueous solution (2E)

Ammonium persulfate; 1 part
Ion-exchange water; 59 parts
Sodium bisulfite; 1 part
Ion-exchange water; 59 parts

(Comparative Example 4)

The double-sided adhesive tape was adjusted in the same manner as in Example 1, except that an acrylic copolymer was not fixed to the nonwoven fabric.

(Comparative Example 5)

The double-sided adhesive tape was adjusted in the same manner as in Example 16, except that an acrylic adhesive composition obtained in the following preparation example was used.

<Adjustment of acrylic adhesive composition>

75 g of deionized water, 20 g of a surfactant Aquaron KH-1025 (manufactured by Daiichi Kogyo Seiyaku; active ingredient 25%), and 37.5 g of a surfactant Latemul PD-104 (manufactured by Kao Corporation, active ingredient 20%) were added to a container, followed by homogeneous dissolution. 454.5 g of n-butyl acrylate, 25 g of methyl (meth)acrylate, 0.5 g of N-vinyl pyrrolidone, 25 g of acrylic acid (active ingredient 80%), and 0.2 g of lauryl mercaptan were added thereto, followed by emulsification to obtain 637.7 g of an emulsified liquid. The emulsion-type acrylic adhesive composition was adjusted in the same manner as in Example 16, except that the resulting emulsified liquid was used.

An adhesive layer of the resulting double-sided adhesive tape exhibited a storage modulus at 30°C of $1.6 \times 10^5$ Pa, a gel fraction of 35%, and a peak value (tanδ) of loss tangent of -12°C.

For the above-mentioned nonwoven fabric substrates, the acrylic copolymer emulsions and double-sided adhesive tapes obtained in Examples 1 to 16 and Comparative Examples 1 to 5, the following evaluations were carried out. The results obtained are given in Tables 1 to 3 below.

(Measurement of glass transition temperature (Tg) of acrylic copolymer)

The above-mentioned acrylic copolymer emulsion was applied to a glass plate to achieve a post-drying film thickness of 0.7 mm, and dried at 40°C for 8 hours. The resulting film was peeled from the glass plate, and dried at 140°C for 5 minutes to obtain a sample. About 10 mg of the sample was weighed and placed in a cylindrical aluminum cell having a diameter of 5 mm and a depth of 2 mm. Using a modulated differential scanning calorimeter DSC-2920 (manufactured by TA Instruments), an endothermic curve was measured at a temperature elevation rate of 20°C/min ranging from -50°C to 150°C. A value of $T_2$ in FIG. 1 was calculated and taken as a glass transition temperature (Tg) of an acrylic copolymer.

(Measurement of tensile strength of nonwoven fabric substrate and double-sided adhesive tape)

Nonwoven fabric substrate and double-sided tape samples were cut into a width of 20 mm and a length of 100 mm. Then, a maximum strength at a tension rate 300 mm/min was measured using a Tensilon tensile tester under the environment of 23°C and 50%RH. The measurement was carried out in the MD direction and the TD direction.

(Measurement of tear strength of nonwoven fabric substrate)

Tear strength of the nonwoven fabric substrate was measured according to JIS-P-8116, using an Elmendorf-type tear tester (manufactured by Yasuda Seiki Co., Ltd.). The measurement was carried out in the MD direction and the TD direction.

(Measurement of interlayer strength of nonwoven fabric substrate)

A cellophane adhesive tape (CT405AP-24, manufactured by NICHIBAN) having a width of 24 mm was attached to both sides of a nonwoven fabric substrate having a width of 25 mm and a length of 150 mm, such that the length of the cellophane adhesive tape is longer than that of the nonwoven fabric. Both ends of the sample were cut off. Then, the cellophane adhesive tape was peeled from one end of the sample adjusted to a width of 15 mm and a length of 150 mm, such that the nonwoven fabric interlayer was peeled to about 30 mm. This sample was inserted into a zipper at a sample-holding space of 20 mm under the environment of 23°C and 50%RH, using Tensilon RTA-100 (manufactured by Orientec Co., Ltd.). An integral average load obtained at a tension rate of 100 mm/min and a measurement distance of 50 mm was read to calculate an interlayer strength. The measurement was carried out in the MD direction and the TD direction.

(Measurement of dynamic viscoelasticity)

Using a viscoelasticity testing device (trade name: Ares 2KSTD, manufactured by Rheometrix Co., Ltd.), a storage modulus at 30°C and a peak value of loss tangent of the adhesive layer were confirmed for the double-sided adhesive tape, by inserting a test specimen into a parallel disk type measurement section of the device, and measuring a storage modulus (G') and a loss elastic modulus (G") of a double-sided adhesive tape at a frequency of 1 Hz and a temperature of -50°C to 150°C. The loss tangent (tanδ) was calculated according to the following equation. The test specimen was fabricated by stacking several adhesive sheets of respective Examples and Comparative Examples such that the thickness of the actual adhesive other than the thickness of the substrate is 0.65 mm.

$$\text{Loss tangent } (\tan\delta) = G''/G'$$

(Measurement of adhesive force)

A double-sided adhesive tape was backed to a PET film having a thickness of 25 $\mu$m, and cut into a width of 20 mm and a length of 100 mm to adjust the double-sided adhesive tape sample. Then, a stainless steel plate as an adherend substrate, under the environment of 23°C and 50%RH, was subjected to one stroke press attachment using a 2 kg roller, followed by allowing to stand for 1 hour. Then, the adhesive force of the double-sided adhesive tape sample was measured when it was peeled at an angle of 180° and a rate of 300 m/min. Further, the measurement of the adhesive force was carried out according to JIS-Z-0237.

(Evaluation of removability)

A double-sided adhesive tape was backed to a PET film having a thickness of 25 $\mu$m, and cut into a width of 20 mm and a length of 100 mm to adjust the double-sided adhesive tape sample. Then, a stainless steel plate and an ABS plate as an adherend substrate, under the environment of 23°C and 50%RH, were subjected to one stroke press attachment using a 2 kg roller, followed by allowing to stand 60°C for 12 days. Then, the sample was allowed to stand under the environment of 23°C and 50%RH for 1 hour, and the removability of the double-sided adhesive tape sample was evaluated when it was peeled at an angle of 135° and a rate of 1 m/min and 20 m/min. Further, the evaluation of removability was carried out based on the following criteria.

A : no occurrence of residual glue on the adherend substrate and no breakage of the nonwoven fabric.
B : very low occurrence of residual glue on the adherend substrate and very low occurrence of nonwoven fabric breakage, but no problem for practical application.
C : inferior to scale "O", but no problem for practical application.
D : occurrence of residual glue on the adherend substrate or occurrence of nonwoven fabric breakage.
E: significant occurrence of residual glue on the adherend substrate or significant occurrence of nonwoven fabric breakage.

[Table 1]

| | | | Ex. 1 | Ex. 2 | Ex. 3 | Ex. 4 | Ex. 5 | Ex. 6 | Ex. 7 |
|---|---|---|---|---|---|---|---|---|---|
| Properties of nonwoven fabric substrate before fixation of acrylic copolymer | Tensile strength (N/20mm) | MD direction | 27.3 | 27.3 | 27.3 | 27.3 | 27.3 | 27.3 | 27.3 |
| | | TD direction | 25.8 | 25.8 | 25.8 | 25.8 | 25.8 | 25.8 | 25.8 |
| Properties of nonwoven fabric substrate after fixation of acrylic copolymer | Tg (°C) of acrylic copolymer | | -33 | -21 | -21 | -21 | -21 | -21 | -21 |
| | Fixed amount (%) of acrylic copolymer | | 12 | 12 | 1 | 3 | 6 | 16 | 22 |
| | Tensile strength (N/20mm) | MD direction | 30.2 | 32.2 | 30.0 | 30.2 | 31.0 | 32.8 | 35.0 |
| | | TD direction | 25.2 | 27.2 | 25.8 | 26.0 | 26.4 | 27.4 | 28.1 |
| | Tear strength (N) | MD direction | 1.14 | 1.29 | 1.19 | 1.20 | 1.29 | 1.30 | 1.30 |
| | | TD direction | 1.40 | 1.40 | 1.19 | 1.20 | 1.29 | 1.40 | 1.40 |
| | Interlayer strength (N/15mm) | MD direction | 1.2 | 1.3 | 0.9 | 1.0 | 1.1 | 1.4 | 1.8 |
| | | TD direction | 1.1 | 1.1 | 0.9 | 1.0 | 1.0 | 1.2 | 1.5 |
| Properties of adhesive layer | Storage modulus (Pa) at 30°C of adhesive layer | | $8.0 \times 10^4$ | $8.0 \times 10^4$ | $8.0 \times 10^4$ | $8.0 \times 10^4$ | $8.0 \times 10^4$ | $8.0 \times 10^4$ | $8.0 \times 10^4$ |
| | Peak temperature (°C) of tan$\delta$ of adhesive layer | | -17 | -17 | -17 | -17 | -17 | -17 | -17 |
| Properties of double-_sided adhesive tape | Tensile strength (N/20mm) | MD direction | 37.2 | 35.2 | 34.0 | 33.9 | 33.9 | 35.2 | 35.0 |
| | | TD direction | 28.7 | 28.3 | 28.3 | 26.5 | 27.1 | 28.2 | 27.6 |
| | Adhesive force (N/20mm) | | 15.3 | 15.5 | 14.9 | 15.2 | 15.1 | 15.6 | 16.2 |

(continued)

|  |  |  | Ex. 1 | Ex. 2 | Ex. 3 | Ex. 4 | Ex. 5 | Ex. 6 | Ex. 7 |
|---|---|---|---|---|---|---|---|---|---|
| Evaluation of double-_sided adhesive tape | Removability | SUS | A | A | c | B | A | A | A |
|  |  | ABS | A | A | C | B | A | A | A |

[Table 2]

|  |  |  | Ex. 8 | Ex. 9 | Ex. 10 | Ex. 11 | Ex.12 | Ex. 13 | Ex. 14 |
|---|---|---|---|---|---|---|---|---|---|
| Properties of nonwoven fabric substrate before fixation of acrylic copolymer | Tensile strength (N/20mm) | MD direction | 27.3 | 27.3 | 25.3 | 8.9 | 27.3 | 27.3 | 27.3 |
|  |  | TD direction | 25.8 | 25.8 | 23.5 | 7.6 | 25.8 | 25.8 | 25.8 |
| Properties of nonwoven fabric substrate after fixation of acrylic copolymer | Tg (°C) of acrylic copolymer |  | -21 | -21 | -21 | -21 | -15 | -10 | -21 |
|  | Fixed amount (%) of acrylic copolymer |  | 30 | 40 | 16 | 35 | 16 | 16 | 16 |
|  | Tensile strength (N/20mm) | MD direction | 35.2 | 35.4 | 28.5 | 19.2 | 33.0 | 35.8 | 32.8 |
|  |  | TD direction | 28.2 | 28.2 | 22.9 | 16.3 | 27.8 | 28.5 | 27.4 |
|  | Tear strength (N) | MD direction | 1.10 | 0.70 | 1.40 | 1.20 | 1.12 | 1.03 | 1.30 |
|  |  | TD direction | 1.10 | 0.70 | 1.50 | 1.10 | 1.19 | 1.09 | 1.40 |
|  | Interlayer strength (N/15mm) | MD direction | 2.8 | 3.0< | 1.2 | 0.5 | 1.8 | 1.9 | 1.4 |
|  |  | TD direction | 2.8 | 3.0< | 1.1 | 0.4 | 1.7 | 1.8 | 1.2 |
| Properties of adhesive layer | Storage modulus (Pa) at 30°C of adhesive layer |  | $8.0 \times 10^4$ | $8.0 \times 10^4$ | $8.0 \times 10^4$ | $8.0 \times 10^4$ | $8.0 \times 10^4$ | $8.0 \times 10^4$ | $7.5 \times 10^4$ |
|  | Peak temperature (°C) of $\tan\delta$ of adhesive layer |  | -17 | -17 | -17 | -17 | -17 | -17 | -12 |
| Properties of double-_sided adhesive tape | Tensile strength (N/20mm) | MD direction | 35.0 | 35.1 | 32.8 | 29.4 | 38.5 | 39.2 | 36.7 |
|  |  | TD direction | 28.0 | 28.2 | 26.2 | 24.2 | 32.3 | 33.2 | 30.0 |
|  | Adhesive force (N/20mm) |  | 16.2 | 16.4 | 15.8 | 15.0 | 15.9 | 15.9 | 15.6 |
| Evaluation of double-_sided adhesive tape | Remov-ability | SUS | B | C | A | C | A | B | A |
|  |  | ABS | B | C | A | C | B | B | A |

[Table 3]

| | | | Ex. 15 | Ex. 16 | Comp. Ex. 1 | Comp. E. 2 | Comp. Ex. 3 | Comp. Ex. 4 | Comp. Ex. 5 |
|---|---|---|---|---|---|---|---|---|---|
| Properties of nonwoven fabric substrate before fixation of acrylic copolymer | Tensile strength (N/20mm) | MD direction | 27.3 | 27.3 | 27.3 | 27.3 | 27.3 | 27.3 | 27.3 |
| | | TD direction | 25.8 | 25.8 | 25.8 | 25.8 | 25.8 | 25.8 | 25.8 |
| Properties of nonwoven fabric substrate after fixation of acrylic copolymer | Tg (°C) of acrylic copolymer | | -21 | -21 | -5 | 5 | 44 | - | -21 |
| | Fixed amount (%) of acrylic copolymer | | 16 | 16 | 12 | 12 | 12 | - | 16 |
| | Tensile strength (N/20mm) | MD direction | 32.8 | 32.8 | 33.9 | 39.2 | 40.8 | 27.3 | 32.8 |
| | | TD direction | 27.4 | 27.4 | 27.8 | 32.1 | 36.7 | 25.8 | 27.4 |
| | Tear strength (N) | MD direction | 1.30 | 1.30 | 0.80 | 0.80 | 0.63 | 1.17 | 1.30 |
| | | TD direction | 1.40 | 1.40 | 0.90 | 0.88 | 0.80 | 1.10 | 1.40 |
| | Interlayer strength (N/15mm) | MD direction | 1.4 | 1.4 | 1.5 | 1.3 | 1.0 | 0.8 | 1.4 |
| | | TD direction | 1.2 | 1.2 | 1.2 | 1.2 | 1.1 | 0.8 | 1.2 |
| Properties of adhesive layer | Storage modulus (Pa) at 30°C of adhesive layer | | $6.0 \times 10^4$ | $1.0 \times 10^5$ | $8.0 \times 10^4$ | $8.0 \times 10^4$ | $8.0 \times 10^4$ | $8.0 \times 10^4$ | $1.6 \times 10^5$ |
| | Peak temperature (°C) of $\tan\delta$ of adhesive layer | | -19 | -7 | -17 | -17 | -17 | -17 | -12 |
| Properties of double-_sided adhesive tape | Tensile strength (N/20mm) | MD direction | 35.5 | 36.3 | 38.7 | 42.8 | 44.3 | 37.3 | 36.0 |
| | | TD direction | 28.6 | 29.0 | 33.3 | 35.6 | 41.0 | 30.5 | 28.9 |
| | Adhesive force (N/20mm) | | 15.4 | 16.0 | 15.6 | 16.0 | 16.2 | 15.3 | 16.3 |
| Evaluation of double-_sided adhesive tape | Removability | SUS | B | B | B | D | E | E | D |
| | | ABS | B | B | D | E | E | D | D |

As can be seen from Examples and Comparative Examples in Table 1, the double-sided adhesive tape of the present invention exhibited both excellent adhesive force and removability.

Brief Description of Drawings

FIG. 1 is a view illustrating the measurement of an endothermic curve by a differential scanning calorimeter, for calculating a glass transition temperature of an acrylic copolymer which is fixed to a nonwoven fabric.

**Claims**

1.   A double-sided adhesive tape comprising a nonwoven fabric substrate and an adhesive layer composed of an acrylic adhesive composition, wherein

the nonwoven fabric substrate is a nonwoven fabric substrate with fixation of an acrylic copolymer having a glass transition temperature of -10°C or lower to a nonwoven fabric having a tensile strength of 5 to 45N/20 mm in both the MD direction and the TD direction,

the acrylic adhesive composition is a water-dispersible emulsion-type acrylic adhesive composition where emulsion particles are dispersed in an aqueous medium, and

the adhesive layer has a storage modulus at a frequency of 1 Hz at 30°C of $6 \times 10^4$ to $1 \times 10^5$ Pa.

2. The double-sided adhesive tape according to claim 1, wherein the acrylic copolymer-fixed nonwoven fabric substrate is a nonwoven fabric substrate where an acrylic copolymerization emulsion is fixed to the nonwoven fabric.

3. The double-sided adhesive tape according to claim 1 or 2, wherein an interlayer strength of the nonwoven fabric substrate obtained by attaching an adhesive film to both sides of the nonwoven fabric substrate and pulling to peel the adhesive film at a rate of 100 mm/min is 1N/15 mm or higher.

4. The double-sided adhesive tape according to any one of claims 1 to 3, wherein the nonwoven fabric substrate has a tear strength of 1N or higher.

5. The double-sided adhesive tape according to any one of claims 1 to 4, wherein the adhesive force of the adhesive tape is in the range of 12 to 20N/20 mm when a stainless steel plate is used as an adherend substrate, and the adhesive tape is backed to a PET film having a thickness of 25 $\mu$m and is subjected to one stroke press attachment using a 2 kg roller in an environment of 23°C and 50%RH, allowed to stand for 1 hour, and peeled at an angle of 180° and at a rate of 300 m/min.

6. The double-sided adhesive tape according to any one of claims 1 to 5, wherein the adhesive layer composed of the acrylic adhesive composition has a peak value of loss tangent (tan$\delta$) at a frequency of 1 Hz and at a temperature of -25°C to -5°C.

7. The double-sided adhesive tape according to any one of claims 1 to 6, wherein the acrylic adhesive composition comprises an acrylic copolymer having n-butyl acrylate or 2-ethyl hexyl acrylate as a monomer component, and the acrylic copolymer having a glass transition temperature of -10°C or lower has n-butyl acrylate or 2-ethyl hexyl acrylate as a monomer component.

8. The double-sided adhesive tape according to any one of claims 1 to 7, wherein the acrylic copolymer having a glass transition temperature of -10°C or lower has a silyl group-containing monomer as a monomer component.

**Patentansprüche**

1. Doppelseitiges Klebeband, umfassend ein Vliessubstrat und eine Klebeschicht, bestehend aus einer Acrylkleberzusammensetzung, wobei

das Vliessubstrat ein Vliessubstrat mit Fixierung eines Acrylcopolymers mit einer Glasübergangstemperatur von -10°C oder niedriger an einem Vlies mit einer Zugfestigkeit von 5 bis 45 N/20 mm, sowohl in Maschinen- als auch in Querrichtung, ist,

die Acrylkleberzusammensetzung eine Acrylkleberzusammensetzung vom wasserdispergierbaren Emulsionstyp ist, wobei Emulsionspartikel in einem wässrigen Medium dispergiert sind, und

die Klebeschicht einen Speichermodul bei einer Frequenz von 1 Hz bei 30°C von $6 \times 10^4$ bis $1 \times 10^5$ Pa aufweist.

2. Doppelseitiges Klebeband gemäß Anspruch 1, wobei das Acrylcopolymer-fixierte Vliessubstrat ein Vliessubstrat ist, bei welchem eine Acrylcopolymerisationsemulsion auf dem Vlies fixiert ist.

3. Doppelseitiges Klebeband gemäß Anspruch 1 oder 2, wobei

die Zwischenschichtfestigkeit des Vliessubstrats, erhalten durch Anbringen eines Klebefilms auf beide Seiten des Vliessubstrats und Ziehen unter Ablösung des Klebefilms bei einer Geschwindigkeit von 100 mm/min, 1 N/15 mm oder höher ist.

4. Doppelseitiges Klebeband gemäß einem der Ansprüche 1 bis 3, wobei das Vliessubstrat eine Reißfestigkeit von 1 N oder höher aufweist.

**5.** Doppelseitiges Klebeband gemäß einem der Ansprüche 1 bis 4, wobei die Adhäsionskraft des Klebebands in dem Bereich von 12 bis 20 N/20 mm liegt, wenn eine Platte aus rostfreiem Stahl als Adhärendensubstrat verwendet wird, und das Klebeband mit einem PET-Film mit einer Dicke von 25 $\mu$m verstärkt wird, und einer Befestigung mit einem Schub unter Verwendung einer 2-kg-Walze in einer Umgebung von 23°C und 50% RF unterworfen wird, 1 Stunde stehengelassen wird, und in einem Winkel von 180° und bei einer Geschwindigkeit von 300 m/min abgezogen wird.

**6.** Doppelseitiges Klebeband gemäß einem der Ansprüche 1 bis 5, wobei die Klebeschicht, bestehend aus der Acrylkleberzusammensetzung einen Verlustfaktorspitzenwert (tan$\delta$) bei einer Frequenz von 1 Hz und einer Temperatur von -25°C bis -5°C aufweist.

**7.** Doppelseitiges Klebeband gemäß einem der Ansprüche 1 bis 6, wobei die Acrylkleberzusammensetzung ein Acrylcopolymer mit n-Butylacrylat oder 2-Ethylhexylacrylat als Monomerkomponente umfasst, und das Acrylcopolymer mit einer Glasübergangstemperatur von -10°C oder niedriger n-Butylacrylat oder 2-Ethylhexylacrylat als Monomerkomponente aufweist.

**8.** Doppelseitiges Klebeband gemäß einem der Ansprüche 1 bis 7, wobei das Acrylpolymer mit einer Glasübergangstemperatur von -10°C oder weniger ein silylgruppenhaltiges Monomer als eine Monomerkomponente aufweist.

## Revendications

**1.** Ruban adhésif double-face comprenant un substrat en tissu non tissé et une couche adhésive composée d'une composition adhésive acrylique, dans lequel
le substrat en tissu non tissé est un substrat en tissu non tissé avec fixation d'un copolymère acrylique ayant une température de transition vitreuse de -10 °C ou moins à un tissu non tissé ayant une résistance à la traction de 5 à 45 N/20 mm à la fois dans la direction MD et dans la direction TD,
la composition adhésive acrylique est une composition adhésive acrylique de type émulsion dispersible dans l'eau où des particules d'émulsion sont dispersées dans un milieu aqueux, et
la couche adhésive a un module de conservation à une fréquence de 1 Hz à 30 °C de $6{\times}10^4$ à $1{\times}10^5$ Pa.

**2.** Ruban adhésif double-face selon la revendication 1, dans lequel le substrat en tissu non tissé fixé à un copolymère acrylique est un substrat en tissu non tissé où une émulsion de copolymérisation acrylique est fixée au tissu non tissé.

**3.** Ruban adhésif double-face selon la revendication 1 ou 2, dans lequel une résistance intercouche du substrat en tissu non tissé obtenue en attachant un film adhésif aux deux côtés du substrat en tissu non tissé et en tirant pour décoller le film adhésif à une vitesse de 100 mm/min est de 1 N/15 mm ou plus.

**4.** Ruban adhésif double-face selon l'une quelconque des revendications 1 à 3, dans lequel le substrat en tissu non tissé a une résistance à la déchirure de 1 N ou plus.

**5.** Ruban adhésif double-face selon l'une quelconque des revendications 1 à 4, dans lequel la force adhésive du ruban adhésif se trouve dans la plage de 12 à 20 N/20 mm quand une plaque en acier inoxydable est utilisée comme substrat adhéré, et le ruban adhésif est doublé sur un film de PET ayant une épaisseur de 25 $\mu$m et est soumis à un attachement par presse à une seule course utilisant un galet de 2 kg dans un environnement de 23 °C et 50 % HR, laissé au repos pendant 1 heure, et décollé selon un angle de 180° et à une vitesse de 300 m/min.

**6.** Ruban adhésif double-face selon l'une quelconque des revendications 1 à 5, dans lequel la couche adhésive composée de la composition adhésive acrylique a une valeur de crête de tangente de perte (tan$\delta$) à une fréquence de 1 Hz et à une température de -25 °C à -5 °C.

**7.** Ruban adhésif double-face selon l'une quelconque des revendications 1 à 6, dans lequel la composition adhésive acrylique comprend un copolymère acrylique ayant de l'acrylate de n-butyle ou de l'acrylate de 2-éthylhexyle comme composant monomère, et le copolymère acrylique ayant une température de transition vitreuse de -10 °C ou moins a de l'acrylate de n-butyle ou de l'acrylate de 2-éthylhexyle comme composant monomère.

**8.** Ruban adhésif double-face selon l'une quelconque des revendications 1 à 7, dans lequel le copolymère acrylique ayant une température de transition vitreuse de -10 °C ou moins a un monomère contenant un groupe silyle comme composant monomère.

FIG. 1

**EP 2 196 513 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8209086 A
- JP 9272850 A
- JP 2001152111 A